# EUROPEAN PATENT APPLICATION

(11) **EP 2 439 630 A2**
(43) Date of publication of application: **11.04.2012**
(21) Application number: 11184899.0
(22) Date of filing: 10.07.2006
(51) Int. Cl.: G06F 3/048, H04M 1/725

(54) **Stripe user interface**

(30) Priority: 11.07.2005 US 179024
(62) Divisional of application: 06795095.6
(71) Applicant: Nokia Corporation, 02150 Espoo (FI)
(72) Inventor: Aaltonen, Antti, FIN-33680 Tampere (FI); Baudet, Gilles, 75018 Paris (FR); Stovicek, Thomas, FIN-00150 Helsinki (FI); Liu, Yingfei, Beijing (CN)
(74) Representative: Khan, Mohammed Saiful Azam

(57) **Abstract**

There is provided an apparatus comprising:

a processor; and
a memory including computer program code,
the memory and the computer program code configured to, with the at least one processor, cause the apparatus to perform at least the following:
display a user interface, the user interface comprising a combination of one or more dynamic icons and indicators, each dynamic icon or indicator being associated with at least one object or application, and configured to change appearance to reflect changes in the associated at least one object or application.

## Description

### CROSS-REFERENCE TO RELATED APPLICATIONS

This application claims priority from Provisional U.S. Patent Application Serial No. 60/586,855 filed on July 9, 2004, and is a Continuation-in-Part application of U.S. Patent Application Serial Number ' filed on July 11, 2005, Express Mail Number EL990506282, entitled "CUTE USER INTERFACE, assigned to the assignee of the instant application, the disclosures of which are each incorporated herein by reference in their entirety.

### BACKGROUND OF THE INVENTION

### 1. Field of the Invention

The present invention is generally related to the field of graphical user interfaces. In particular, the disclosed embodiments are related to a user interface for a mobile computing device.

### 2. Brief Description of Related Developments

Generally, information systems in mobile platforms tend to deal with information in the platform separately, and the relationship between different types of information and information levels is not always clear. This can make it difficult to locate information stored in the system quickly and efficiently. It would be advantageous to relate information stored in the system and, using such relationships, enable an expedient and efficient way to locate information.

Currently, mobile platform user interfaces ("UI's") use a single indicator icon (as in e.g. message universal indicator) for notifying that one or more events of same type has/have been occurred. If one indicator icon is used for notifying the user or indicating several items of same type, the user does not know how many individual events may be bundled in a single icon. In addition, the user does not know anything about the sequence in which the events have happened or within what time period the events may have occurred.

Generally, if an event requires more screen "real estate" for displaying the information associated with the event, a pop-up window is used. However, pop-up windows tend to block the underlying view and user interface objects under the pop-up are not visible to the user anymore.

Visual notifications can be displayed in different manners depending on the priority of notification. One way is to use an icon in a dedicated screen position for notifying about occurred event. This screen position (for example, in windows™ system tray and the NOKIA™ Series 60 universal indicator pane) may hold several indicators for each event type and in which the order of the icons have no apparent meaning. Often icons are very small and they disappear after the user has interacted with the event associated with the notification.

A pop-up (dialogue window) is used in a case when more display and/or user intervention is required for displaying the event's information. Visual notifiers are typically enhanced with audio and tactile (vibration) output.

A graphical user interface generally provides a means by which a user can control a device, such as for example a computing system or a mobile telephone. Generally current mobile user interfaces are application-driven which means that in order to perform his/her task the user must use one or more applications in order to achieve his/her goal. For example, sending a multimedia messaging service ("MMS") message requires user to use a phonebook, media gallery and text editor. Each of these applications may have their own user interface conventions, which may lead to poor performance and unnecessary steps in each task.

Mobile user interfaces are mainly menu-driven, which means that the main functionality of the application is accessible only via the menu structure. Because mobile devices are becoming more and more versatile and feature-packed, the menu structure is decayed and this will cause huge usability problems.

One poplar type of graphical user interface ("GUI") display is based on a visual metaphor which defines a monitor screen to be a workspace known as a "desktop", in which the contents of files and documents are presented in relocatable regions known as "windows". In addition to windows, the graphical user interface typically includes icons that represent various objects in a computer system. In this context, the term "object" refers to any software entity that exists in the memory of the computer and constitutes a specimen of a particular class. For example, an object can be a data file, which contains the contents of a document. It can also be an application program or other type of service provider, such as a hardware driver. An object can also be a container for other objects, such as a folder or a window.

Another problem is linked to notifying the user about the (possible) interesting events. The notifications may not provide enough information for the user about the object/event they are associated with, thus requiring more user attention and interaction with the device. For example, if the user receives a new message, the user does not typically know the sender or subject of' the message without opening the message. Also, often the notifications are disruptive in such a way that the performance of the user's main task is interrupted.

It would be helpful to have a user interface with a navigation model that is suitable for one-handed interaction, particularly in items of interaction and navigation.

### SUMMARY OF THE INVENTION

The present' invention is directed to a user interface for an electronic device. In one embodiment, the user interface comprises a system area, a summary stripe area, and an overview area to present or display information related to a selected stripe. Information and data related to different categories can be presented in each of the stripe areas. Each summary stripe provides an overview to the events and objects of the selected category. The summary stripe area can include a Search category, a Content category, a Calendar category, a People or Contact category, an Applications category, and an Environment category. The number and categories of the stripes can vary depending on the device. The embodiments of the user interface of the present invention allow for simultaneously interaction between content, users, tasks, environment and system related information, display an overview of the terminal contents and status, display proximity and context information, provide awareness information about persons and events and enables easy customization and scalability.

### BRIEF DESCRIPTION OF THE DRAWINGS

The foregoing aspects and other features of the present invention are explained in the following description, taken in connection with the accompanying drawings, wherein:

FIG. 1A is a schematic diagram of one embodiment of an electronic device incorporating features of the present invention.

FIG. 1B is an illustration of one embodiment of a device that includes a user interface incorporating features of the present invention.

FIG. 2A is an illustration of one embodiment of a user interface incorporating features of the present invention.

FIG. 2B is an illustration of exemplary dynamic icons that can be used in embodiments of the present invention.

FIG. 3 is an illustration of one embodiment of a user interface incorporating features of the present invention where the Library or Content mode/category is selected.

FIG. 4 is an illustration of one embodiment of a user interface incorporating features of the present invention where the Environment- mode/category is selected.

FIG. 5 is an illustration of one embodiment of a user interface incorporating features of the present invention where the Contacts or People mode/category is selected.

FIG. 6 is an illustration of one embodiment of a user interface incorporating features of the present invention where the Calendar mode/category is selected.

FIG. 7 is an illustration of one embodiment of a user interface incorporating features of the present invention where the Applications mode/category is selected.

FIG. 8 is an illustration of one embodiment of a user interface incorporating features of the present invention where the Search mode/category is selected.

FIG. 9 is an illustration of one embodiment of a System area of a user interface incorporating features of the present invention.

FIG. 10 a flowchart of one embodiment of a method incorporating features of the present invention.

FIG. 11 is an illustration of one embodiment of the different zoom levels in a user interface incorporating features of the present invention.

FIG. 12 is an illustration of the hierarchical relationship and grid-like navigation in a user interface incorporating features of the present invention.

FIG. 13 is an illustration of the scalability of the stripe areas in one embodiment of a user interface incorporating features of the present invention with scalable information areas.

FIG. 14 is a visual illustration of different embodiments/configurations of a user interface incorporating features of the present invention.

FIG. 15 is a visual illustration or screen shot of different embodiments and layouts of a user interface incorporating features of the present invention.

FIG. 16 is a visual illustration of one embodiment of a three-dimensional view or display of a user interface incorporating features of the present invention.

FIGS. 17A-17I are visual illustrations of embodiments of the features and functions of a user interface incorporating features of the present invention adapted to fit a display area of a device utilizing the user interface of the present invention.

FIG. 18 is a flowchart of one embodiment of interaction with a user interface incorporating features of the present invention.

FIG. 19 is a flow chart illustrating one embodiment of a method incorporating features of the present invention.

FIGS. 20A-20H are illustrations of screen shots of one embodiment of seeking and locating information using a user interface incorporating features of the present invention.

FIGS. 21A-21E are illustrations of screen shots of the search application of one embodiment of a user interface incorporating features of the present invention.

FIGS. 22A-22I are illustrations of screen shots of an active idle state of one embodiment of a user interface incorporating features of the present invention.

FIGS. 23A-23F are illustrations of screen shots of event notification in one embodiment of a user interface incorporating features of the present invention.

FIGS. 24A-24F are illustrations of screen shots of one embodiment of the magnifier feature in a user interface incorporating features of the present invention.

FIGS. 25A-25H are illustrations of screen shots of device management system in one embodiment of a user interface incorporating features of the present invention.

FIG. 26 is a block diagram of one embodiment of an architecture that can be used to practice the embodiments of the present invention.

FIG. 27 is a flow chart illustrating one embodiment of a method incorporating features of the present invention.

FIG. 28 is a flow chart illustrating one embodiment of a method incorporating features of the present invention.

FIG. 29 is a flow chart illustrating one embodiment of a method incorporating features of the present invention.

FIG. 30 is a flow chart illustrating one embodiment of a method incorporating features of the present invention.

### DETAILED DESCRIPTION OF THE PREFERRED EMBODIMENT (s)

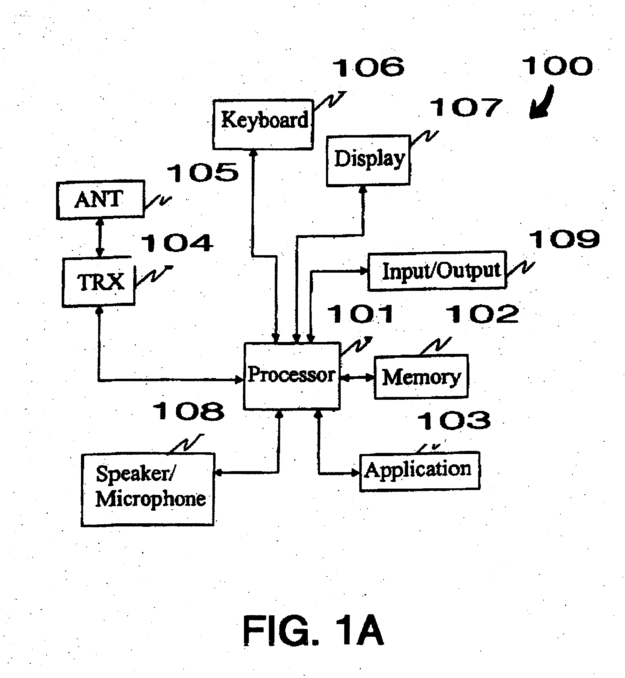

Referring to Fig. 1A, a schematic or block diagram of a system 100 incorporating features of the present invention is illustrated. Although the present invention will be described with reference to the embodiments shown in the drawings, it should be understood that the present invention can be embodied in many alternate forms of embodiments. In addition, any suitable size, shape or type of elements or materials could be used.

The user interface of the present invention generally provides the availability of important information in a device in a single glance. The disclosed embodiments provide for simultaneous interaction between categories of information stored on or available through a device, which can include information related to content, users, tasks, environment and other system information and applications.

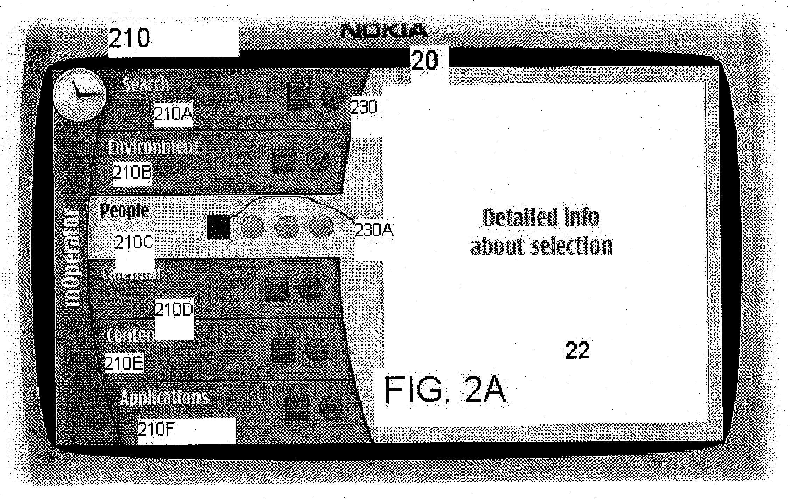

For example, referring to FIG. 2A, one embodiment of a user interface incorporating features of the present invention is illustrated. As shown in FIG. 2A, the user interface provides the user with a graphical display of features, functions and information that is and can be stored within the device or is available through the device. The user interface of the present invention allows the user to interact simultaneously between each of the categories of information.

The disclosed embodiments provide a user interface with a background in the form of "stripes" or bars for system related functions and information. Each stripe 210 in FIG. 2A is generally a horizontal display of features and functions available through the user interface 200. Interaction with the user interface can be carried out using for example, a five way joy stick or. a cursor. The searching functionality is enhanced with the ease to access and look up information at each stripe, for example, content, people, events, or services, either locally, in proximity or remotely. The user interface is easily scalable and is not limited by any specific screen size, ratio, shape or orientation. Awareness, overviews and access to interesting objects and events is provided by using different kinds of notifications.

The user interface of the present invention is generally provided on a display of an electronic device, such as for example, a portable terminal device, including a mobile telephone. FIG. 1A illustrates a schematic diagram of one embodiment of an electronic device 100 incorporating features of the present invention. The device 100 can be a wireless terminal device operating in a communication system such as for example, a GSM, GPRS, UMTS or Bluetooth system. The electronic device can also be for example a hand-held, portable or desktop computer or a game device or console, or a personal digital assistant ("PDA"). In alternate embodiments, the user interface of the present invention can be implemented on any content and task driven electronic device. The device 100 generally comprises a processor 101 and a memory 102 for operating tasks of the device 100 and for running applications 103 stored in the device. For operating in a communications system, the device can include a transceiver 104 and an antenna 105. For data input, the device 100 can include a keyboard 106, which can be a soft key keyboard or touch sensitive area on a surface of the device providing visual symbols or other indicators' for the user to select by touching the symbol. The device 100 can also include other input means, such as for example a joystick, a rocker switch controller, a touch sensitive display or voice command ability. For data output, the device 100 includes a display 107 that can be a monochrome or color display, an LCD panel, a touch sensitive panel or other suitable display as well as vibration motors for tactile output. In on embodiment, the processor 101 can accommodate other input/output devices 109 as well as a speaker/microphone 108.

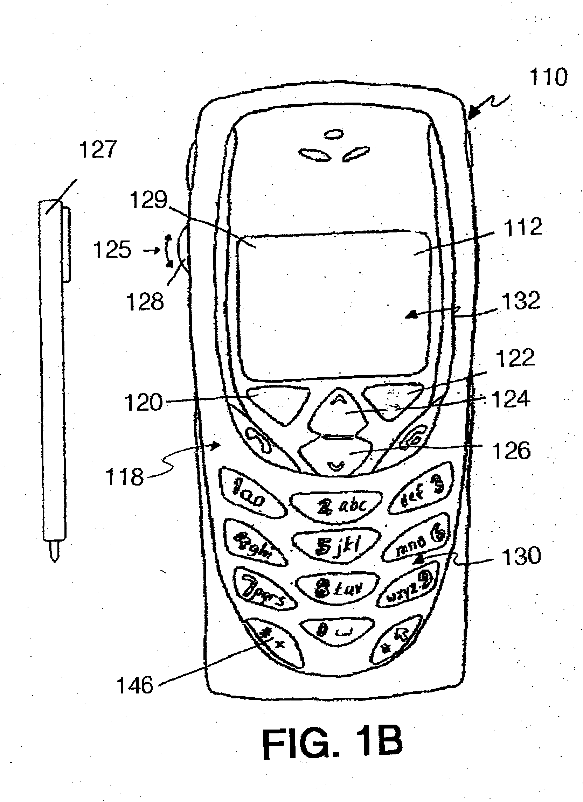

The invention may be embodied in various forms. One embodiment includes a mobile device, such as a personal digital assistant (PDA), mobile terminal, cellular telephone or the like, having a navigation display of an organizational model. The organizational model graphically represents features of a computer program for the device. Referring to FIG. 1B, one embodiment of a mobile device 110 on which the present invention may be utilized generally includes a display 112 and a keypad 118. The keypad 118 may include a left movement button 120, a right movement button 122, an up arrow button 124, a down arrow button 126, an input wheel 128, and other input keys 130. The keys 120, 122, 124 and 126 could also comprise soft keys, the function of which adapts to the status of the user interface. The input wheel 128 can rotate for providing rotary inputs to the device and can be depressed as a whole, like a button, for providing selector inputs. In another embodiment, the input wheel is located on the keypad as a rotatable button that can be rotated clockwise and counterclockwise, as well as depressed as a whole.

The display 112 shows an organizational model 132 of a computer program stored in the memory 102 of FIG. 1A. The memory 102 also contains instructions for displaying the organizational model 132 and for navigating within the computer program using the organizational model. A computer program as used herein may refer to any computer program within which an operator may navigate features of the program, such as operating systems, word processors, spreadsheets, email, telephone computer programs, games etc. In operation, the processor 101 of FIG. 1A processes the instructions in the memory 102 in accordance with the computer program and receives inputs from the keypad 106 or other input device for modifying the view shown on the display 112 as is known in the art for graphical user interfaces (GUIs). The keypad 106, display 107 and processor 101 may be referred to collectively as a graphical user interface through which the user can-interact with the device 110 of FIG. 1B.

The user navigates through the computer program and its features using the model 132 and the GUI.

Referring to FIG. 2A, in one embodiment, the user interface 200 of the present invention generally provides a graphical user interface or display that includes a system area 201, a summary area 210 and an overview area 220 that can provide detailed information related to a selected summary area category 210A-210F.

If the user wants to use the functions provided in the menu of the user interface, the user selects a region, such as for example "People" 210C of FIG. 2A by moving a selection or controller device in the appropriate direction. Referring to FIG. 1B, this can include for example, moving a joystick controller to the "up" direction or by pressing the appropriate key 124, 128 switch or soft key, or "tapping" or contacting the corresponding portion of touch sensitive display 129 with, for example, the stylus 127. The user interface will then launch the "People" application and the user can access the features of "People" as will be described below.

The summary area 210 shown in FIG. 2A generally comprises six categories. In alternate embodiments any suitable number of categories may be utilized in the summary area 210 depending on the device and the application. The summary area 210 of Fig. 2A generally includes a Search category or application 210A, an Environment category 210B, a People category 210C, a Calendar category 210D, a Content category 210E and an Applications category 210F. In alternate embodiments, the category of each summary area 210 can vary depending on the particular application and the device on which the user interface 200 resides. For example, if the particular device on which the user interface of the present invention is used is a game deck device, a summary area category called "N-gage arena" might be included. It is also noted that the title of each category area is exemplary and merely intended to provide the user with a short identifying description of what the underlying application related to the category is and the information that it can provide or can be accessed. Thus, the particular embodiment illustrated in FIG. 2A is merely exemplary, and the layout and categories can be arranged in any suitable manner that corresponds to the particular device and application.

In one embodiment, referring to FIG. 2A., each summary area 210, also referred to herein as a "stripe" provides an overview to the events and objects of a selected category 210A-210F. Each summary area category 210A-210F could also include one or more indicators or icons 230. The icons could include for example text, images, dynamic icons, hypertext and user interface widgets. The indicators or icons 230 generally provide visual links to other information related to the summary area category. The types of indicators 230 can be any suitable type, number or combination thereof, depending only on the particular application and device.

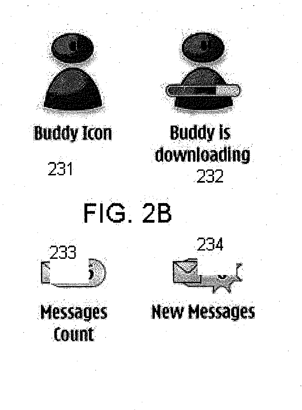

Referring to FIG. 2B, some examples of dynamic icons are illustrated. A dynamic icon is generally an icon, the appearance of which can change in order to reflect the changes of the associated object or application. For example, referring to FIG. 2A and 2B, one of the indicators 230A in the People category 210C could include a "Buddy Icon" 231. If the "Buddy" is downloading for example, the dynamic icon 231 can change to an image 232 to reflect that the "Buddy is Downloading". Another example of a dynamic icon is shown with reference to the message count icon 233. The message count icon 233 could indicate the number of messages received, in this state 233 is shown as 6. In another state 234, if new messages are received, the icon 233 might change to something like that shown as icon 234, to indicate the presence of "new" or perhaps "unread" messages.

Referring again to FIG. 2A, each stripe 210A-210F can indicate different levels of information related to the particular category that is assigned to the particular stripe 210A-210F.

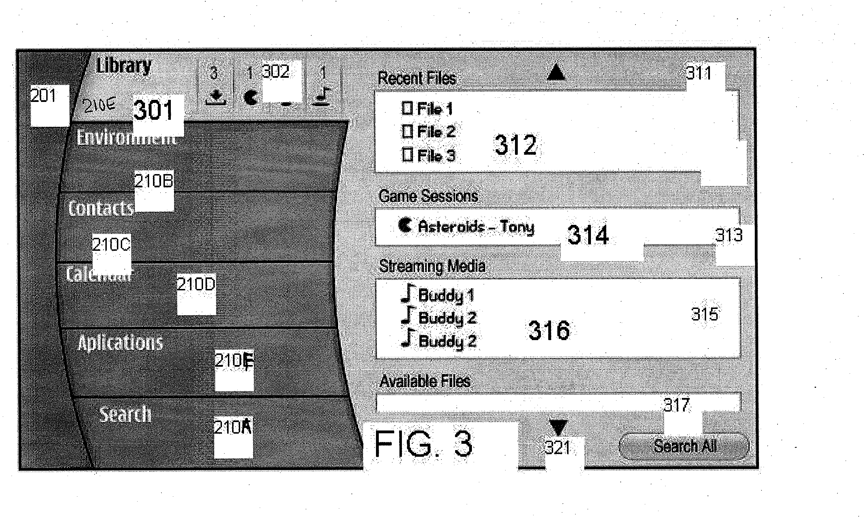

For example, referring to FIG. 3, the Content stripe 210E of FIG. 2A could include Library information. Library information could relate to files and other information stored in the device. FIG. 3 illustrates the selection of the Content or Library stripe 301. When selected, the Library stripe 301 is highlighted and detailed information 310 related to stored content is shown in the detail area 220 of FIG. 2A. The content on library information stripe 301 can generally provide awareness of and an overview to events and objects related to for example, personal media as well as enable activities related to accessing, playing and sharing data.

In one embodiment, the Library stripe 301 may include one or more levels of information that can be accessed by the user when the Library stripe is highlighted. The levels 310 of information can be displayed as, for example, extensions of the library stripe 301 in the detailed information area 220. Each level 311, 313, 315 and 317, could include suitable indicators or icons, 312, 314, 316 and 318, that detail and allow selection of the individual files and information. For example, level 311 has indicators or icons 312 that provide information related to recently accessed files. The icons or objects provide access to the underlying file in known manners. Other levels of information related to content in the device could include gaming sessions 313, streaming/broadcasting media 315 and available media and files 327. In alternate embodiments the different levels 310 could include any suitable categories of information. The levels 310 could be considered "top" level categories for information available in other sub-levels.

A second level related to the highlighted or selected Library stripe 301 can provide preview and thumbnails of the stored information with controls to access the information. For example, another sub-level 310 could provide access to "Favorites" such as for example, play lists, image sets, bookmarks, channel sets, creating content, and different kinds of content views. Different content views can be based on type, shared to, ratings, annotations, locations and use count, for example, a still further sub-level might add overviews to contacts (such as "get" or "share"), calendar functions (such as "maintain", "archive", "backup" or "sync") and environment (such as "get", "share" or "maintain"). The number of levels or sub-levels is only limited by the information desired and the system and application of the user interface.

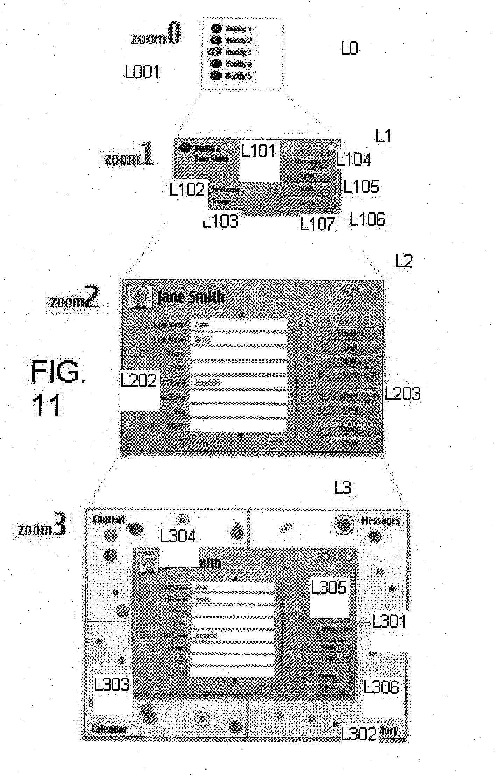

In one embodiment, access to each of the different levels can be referred to as a process called "zooming". In one embodiment referring to FIG. 11 "zooming" can include for example, four discrete zoom levels, L0-L3, for each summary stripe 210 of FIG. 2A. In alternate embodiments, any suitable number of zoom levels can be utilized. For example, referring to FIG. 11, zoom level LO present information that is visible in the summary stripes area 210 of FIG. 2A. Zoom level LO can comprise one or more dynamic icons L001 with one or more status and property indications. Zoom level LO of FIG. 11 presents a list of "buddies" that would be a component of the "People" stripe 210C of FIG. 2A. Each "buddy" of "Buddy 1" to "Buddy 5" has a dynamic icon associated with it that can display further information related to the particular "buddy". In one embodiment, the detailed information section 220 of FIG. 2A could include L2 information. By selecting one of "Buddy 1" to "Buddy 5", the zoom level L1 is presented or displayed. Zoom level L1 generally presents the selected' object, in this case "Buddy 2" as a larger thumbnail or preview, with information related to the selected object, Buddy 2, also identified in this example as "Jane Smith". As shown in the example of FIG. 11, the information includes the name, L101 availability L102 and message information L103. In one embodiment, the zoom level L1 could also include the most frequently used controls, such as for example "Messages" L104, "CHAT" L105, "CALL" L106 and "MORE" L107. In alternate embodiments, any suitable controls can be displayed. The zoom level L1 can be displayed by using the stripe 210C, with dynamic height, or as a tool tip, for example. In alternate embodiments, the zoom level L1 can be displayed in any suitable fashion, shape or presentation.

If more detailed information is desired from the zoom level L1, the object or application of zoom level L1 can be opened to create zoom level L2. The zoom level L2 generally includes more detailed information related to the selected object. In this example, the name of Buddy 2 is more prominently displayed as "Jane Smith" in a corner area L201 of the display for level L2. Zoom level L2 may also include information data fields L202 to view, edit and input further information related to the selected object. One or more controls L203 could be displayed and available to be selected. The opened object/application of zoom level L2 could utilize the window space of the particular device or display based on need. This could include sizing and resizing to maximize or minimize window space dynamically based on need. The zoom level L2 can be of any suitable size and utilize and screen view of the particular display or device.

Zoom level L3 shown in the embodiment of FIG. 11 illustrates or presents the information from zoom level L2 in such a way that it is possible to display relations to other objects L301-L304 on the application windows border region L306. In the example illustrated in FIG. 11, zoom level L3 is using a full screen view and the object L305 is generally in the center area of the screen L3 with object Messages L301, Memory L302, Calendar L303 and Contact L304 around the border area region L306. In alternate embodiments, the different zoom levels could be presented in any suitable manner, generally displaying more detailed information in each level. The numbers of levels is only limited by the particular application, device or user requirements.

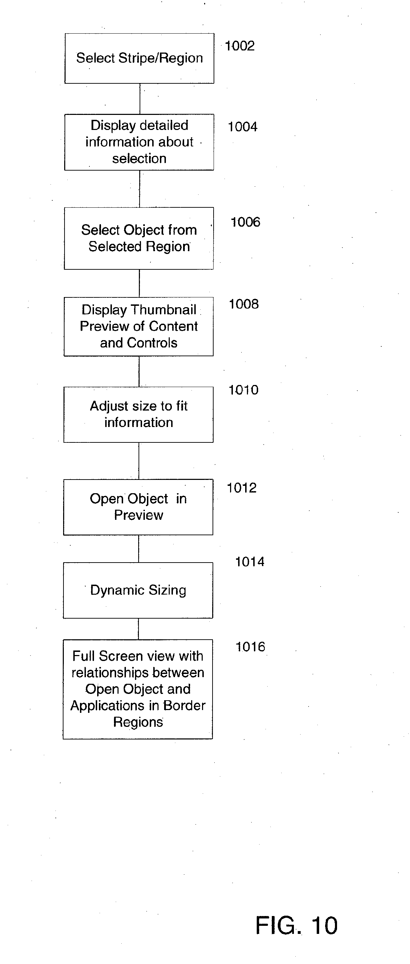

FIG. 10 illustrates one embodiment of a method incorporating features of the present invention. In one embodiment, the user selects or highlights 1002 a region or stripe. Information related to the stripe is displayed 1004 and objects in the stripe are available to be selected. An object in the selected region is selected 1006, by for example, clicking on the object. A thumbnail preview of objects corresponding to content in the selected region can be displayed 1008. If needed, the size of the stripe or display box can automatically size or scale to fit the preview information, while other non-selected stripes adjust as well. An object in the preview can be selected and opened 1012 with more detailed information related to the selected object being displayed. Dynamic sizing 1014 can be applied if needed. A full screen view can be selected or applied 1016, in which case the relationships between the displayed object and the applications in the border region of the display will be identified.

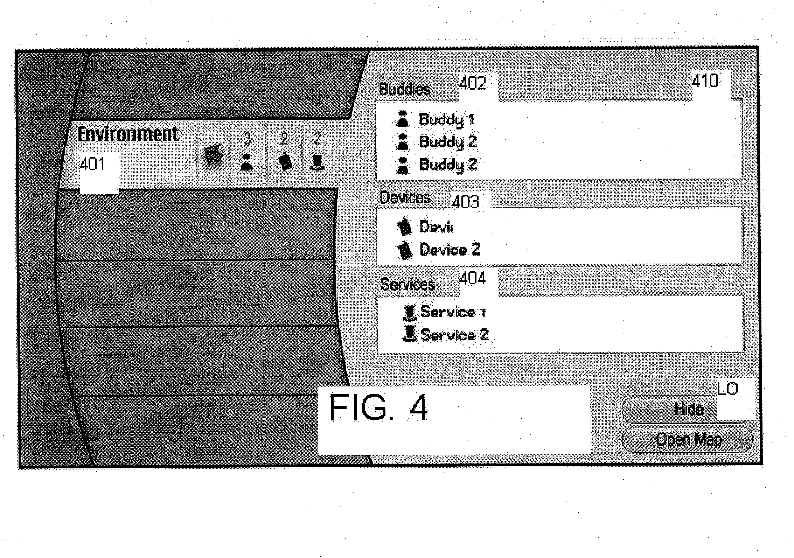

More detailed information related to each summary area category 210 of FIG. 2A will be discussed. Referring to FIG. 4, one embodiment of a selected Environment category or stripe 401 is illustrated. The information or application related to the Environment category 401 is generally for interacting with environment, objects and people in proximity of the device on which the user interface of the present invention is implemented. As shown in FIG. 4, the top level or zoom level L0 of FIG. 11 is illustrated with respected to the selected Environment category 401. As shown in FIG. 4, selected environment category 401, at the zoom level L0 includes indicators for levels of information for "Buddies" 402, "Devices" 403 and "Services" 404. In alternate embodiments, and suitable indicators can be used and displayed. Selecting one of the objects from the level L0 in the screen 410 can take the user to a more detailed information level, referred to as L1 in FIG. 11. The zoom level L1 for Environment 401 could include more details related to a selected information level 402, 403 or 404. Selection of an object on the screen of 410 can be by any known or suitable manner. The zoom level L3 could add the possibility to view a map. In one embodiment, interaction only takes place with objects that are in the general area.

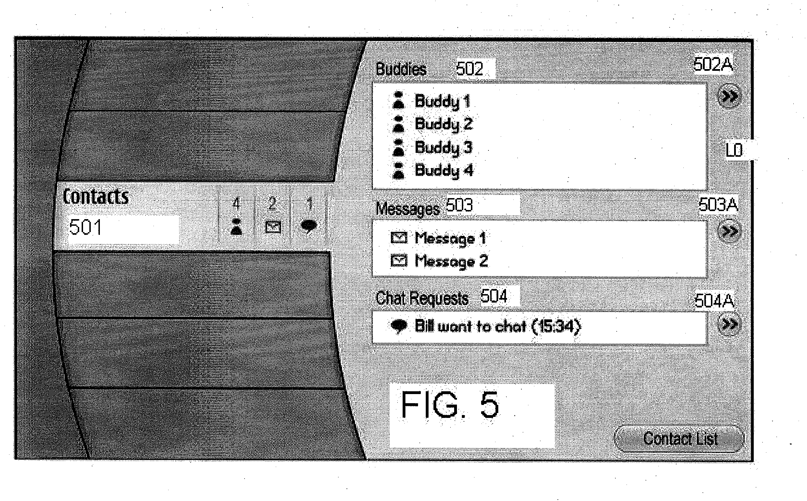

Referring to FIG. 5, a screen displaying the selected Contacts category 501 is illustrated. "Contacts", which might also be referred to as "People" can generally provide information and access for conversations, messaging, and contacts. L0 provides indicators for categories such as for example; missed conversations, new messages 503, Buddies online 502 and chat requests 504. Selecting one of the icons 502a, 503a, or 504a will allow the user to access the next level or sub-level of information related to the corresponding category. For example, zoom level L2 related to the Contacts category 501 can provide access to unified messaging client, PEC with communication history, Chat, Voice (rich) calls. Zoom level L3 for Contacts 501 could be essentially zoom level L2 with an overview to Content, Calendar, Applications, Environment based on a selected contact. This level will allow a user to select a contact and view information related to the contact, at different, but related levels.

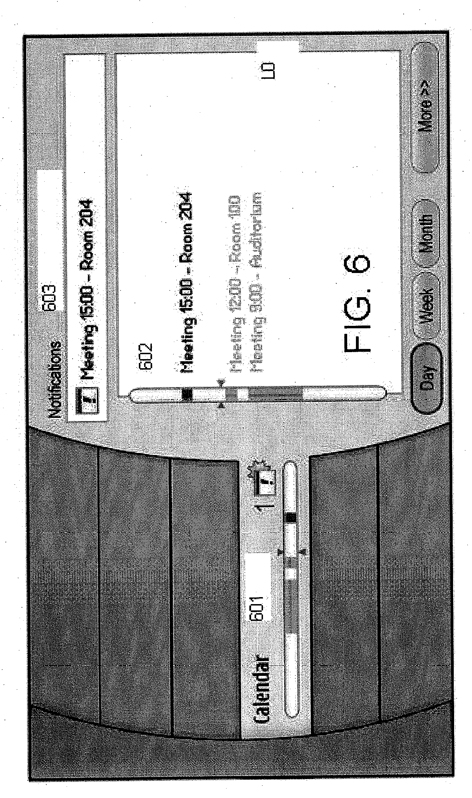

FIG. 6 illustrates an exemplary embodiment of a selected Calendar category 601. Generally, the Calendar category 602 displays events and calendar as well as visualizes temporal relations between objects. At the first level of information L0, shown in FIG. 6, a timeline visualization 602 is shown and indicators or notifications 603 for upcoming events, tasks, to-dos, communication and content journal. In embodiment, the information level L1 can adds some controls to the L0 view of FIG. 6. The information level L2 may comprise a typical calendar view.

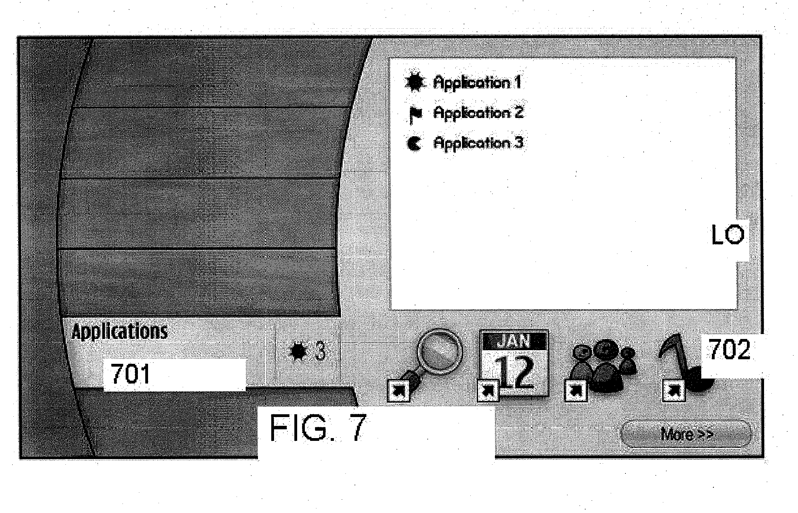

FIG. 7 illustrates one embodiment of the L0 information level of a selected Applications category 701. The Applications category 701 is generally for enabling am application-driven approach as well as for accessing 3^{rd} party applications. The level L0 of FIG. 7 includes a "Task bar" view showing currently active applications.

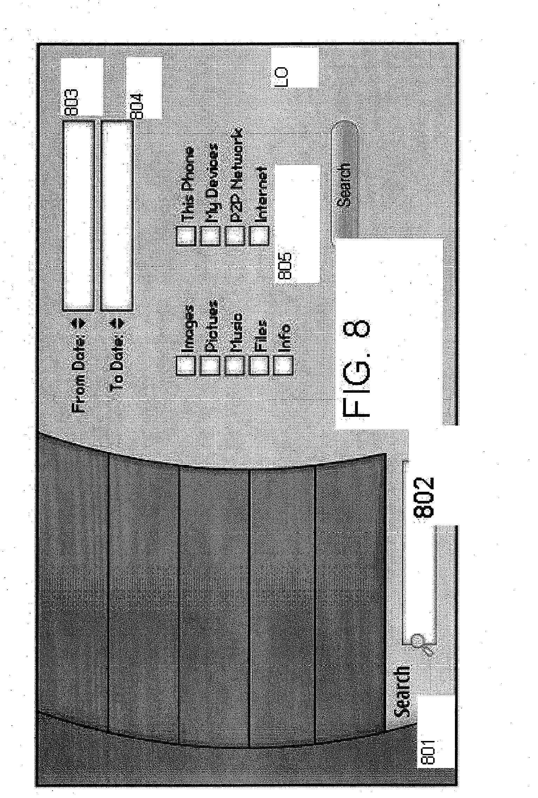

FIG. 8 illustrates one embodiment of the display of a user interface of the present invention after selection of the Search category 210A of FIG. 2A. When in the selected Search category or mode 801, the user may be looking for content, people, events locally or remotely. The information level L0 of FIG. 7 displays text box 802 and/or 803 for inputting a search string. In addition, other options for searching can be provided on the top level or a subsequent level for advanced searching. The other options can include for example, a date 803, 804, type 805 (including for example, Content types, event, people, and service location (local or remote)). Each subsequent information level can bring advanced search options (e.g. keyword categories metadata), search history and saved searches and search results. In one embodiment, a subsequent level might allow and present search results in relation to Contacts, Applications, Environment and Calendar.

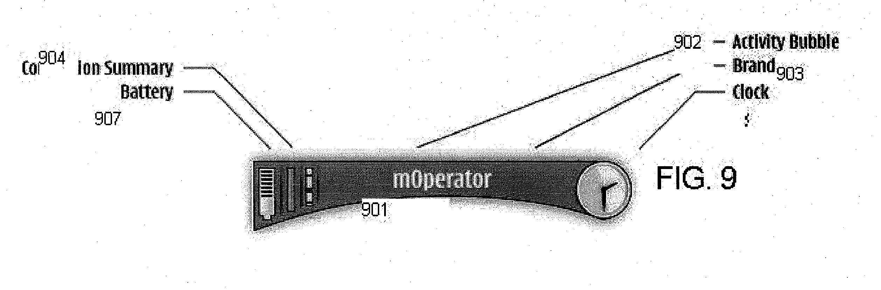

FIG. 9 provides an illustration of one embodiment of the system area 201 of FIG. 2A. The system area 901 is generally reserved for indicators or tools that are not directly related to any summary stripe category. The general purpose of the system area 901 is to manage and be aware of current connections and traffic 902, provide operator and other service provider information 903, be aware of current battery status and provide recharge indications 904, provide time and date data 905, and profile data or information 906. Selection of or highlighting any one of the controls or indicators 902-906 can provide more detailed information related to the selected category or utility.

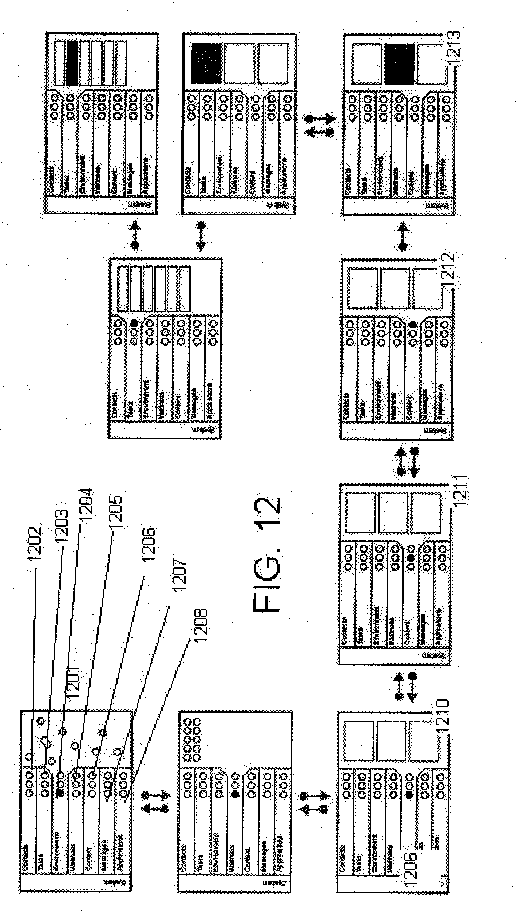

Generally, navigation about the interface 200 of FIG. 2A is generally based on a grid-like navigation. For example, FIG. 12 illustrates one embodiment of a grid-like navigation system. For example, using a 5-way joystick, the user could navigate between system area 1201 and the various stripes 1202-1208. For example, to move between stripes 1202-1208, the user can move the cursor in an "up/down" direction. To select further information within a selected stripe, such as Contact 1206 in screen 1210, the user can move the cursor "left/right". As shown in FIG. 12, by moving the cursor "right" and selecting the next object within the stripe, the different levels of information will be displayed in screens 1211, 1212 and 1213. In alternate embodiments, any suitable navigation system or device can be used. For example, the primary input device for one-handed interaction could be a five-way joy stick, rocker key or track ball. Secondary devices can include soft-keys or capacitive slides, for example. Two-handed interaction could include a stylus and touch screen (capacitive), for example. In alternate embodiments any suitable input device can be used to select, edit and input information.

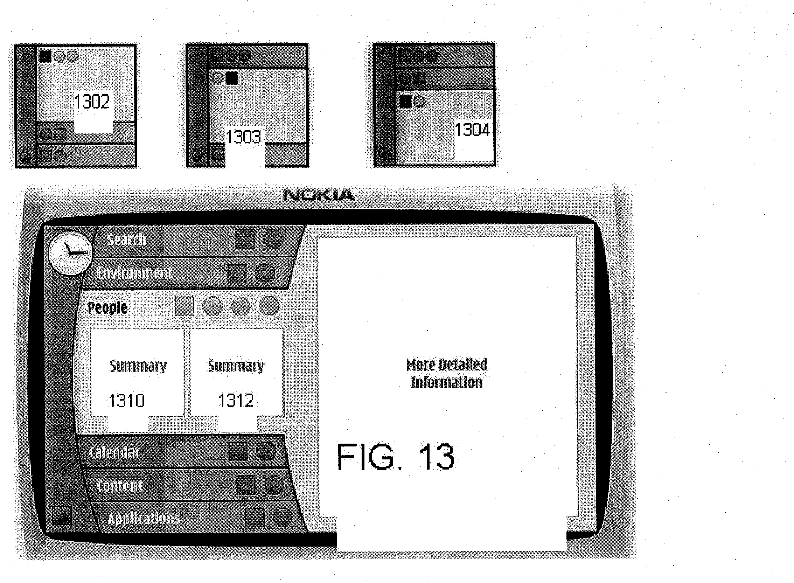

The sizes and shapes of the object displayed on the user interface 200 of FIG. 2A can vary and can be scaled and sized to accommodate the desired display of the device application. Referring to FIG. 13, the height, width and/or shape of the selected stripe 1301 may also vary dynamically based on the amount of available information and the information to be displayed on the selected level. For example, in the selected stripe 1301, the information blocks 1310 and 1312 are displayed. The stripe 1301 has been adjusted and shaped to display these information blocks 1310 and 1312. In one embodiment, summary stripes that do not contain any active indicators may be minimized and the stripes requiring more space are then stretched and shaped in such a way that the whole screen may be utilized as shown in the screens 1302, 1303 and 1304, where only three categories or stripes are illustrated when more may be available. Also, all the stripes may not be visible at the same time or one or more stripes may be partially shown or hidden.

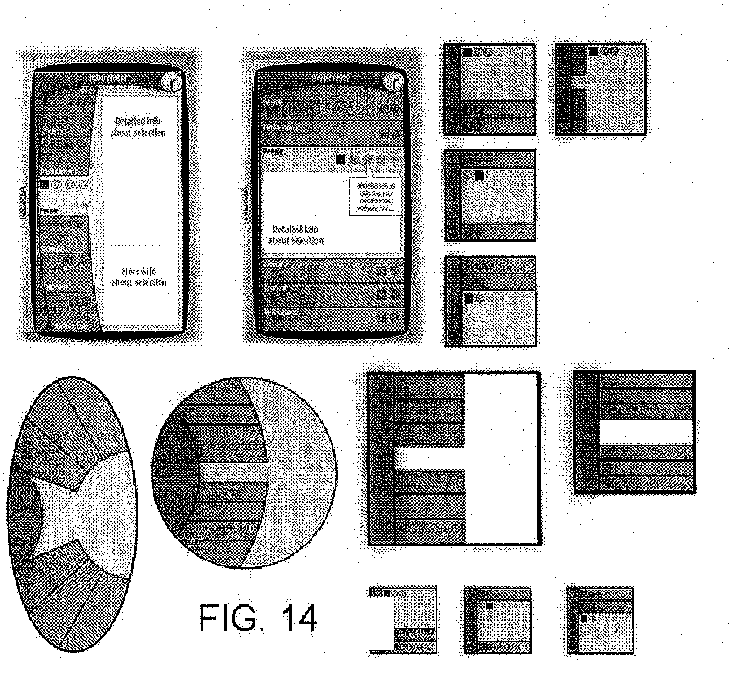

FIG. 14 illustrates different embodiments of the user interface of the present invention that have been scaled, shaped and sized for the particular screen size and shape. As shown in FIG. 14, the layout and presentation of the embodiments of the user interface of the present invention is only limited by the type of device/display using the user interface.

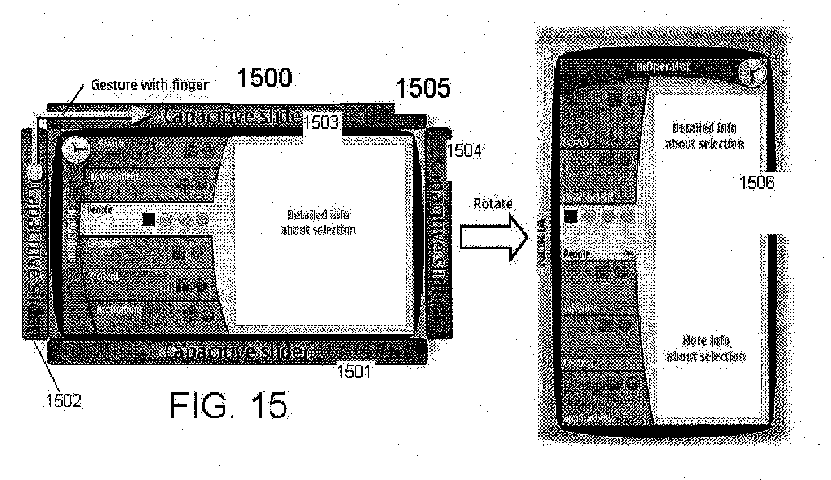

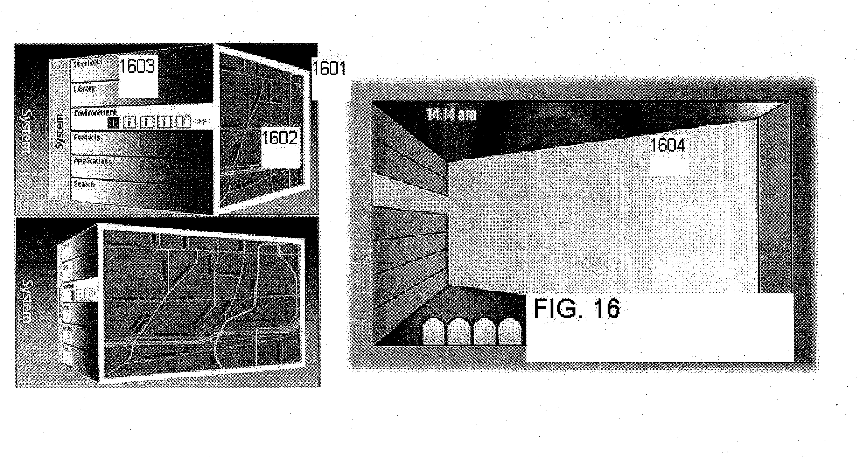

In one embodiment, the user interface 200 of FIG. 2A can be rotated from a portrait to a landscape orientation. For example, referring to FIG. 15, capacitive sliders 1501-1504 can be used to shift the user interface 1500 from a portrait orientation 1505 to a landscape orientation 1506. In alternate embodiments, any suitable means can be used to rotate the user interface display from one orientation to another. In one embodiment, the user interface of the present invention can be a three-dimensional (3-D) image or representation 1601, as shown in FIG. 16. As shown in FIG. 16, each side 1602-1604 of the three-dimensional object 1601 can provide a view that includes a more detailed level of information. For example, the side 1603 includes the L0 zoom level as previously described. The side 1602 can include a map view with more detailed information related to the Environment category.

The disclosed embodiments provide different ways to notify a user. The notifications can use sound, touch or visuals (animations, transparency) and there are generally four major types of notifications. A pop-up notifier is used to inform the user that actions are required. It pops in to the front of all windows and receives the input focus. A passive (soft) notifier is a pop-up used to inform users of information, without taking input focus. For example, a passive notifier does not disturb the user's current task or- activity. A status notifier is used to indicate a state, active function, messages received etc. and stays active until the state changes. For example, icons appear in locations such as the pan summary of the user interface. The presence of icons can indicate information and modifiers can be used to provide the information. Field notifiers are associated with input fields and errors in entry.

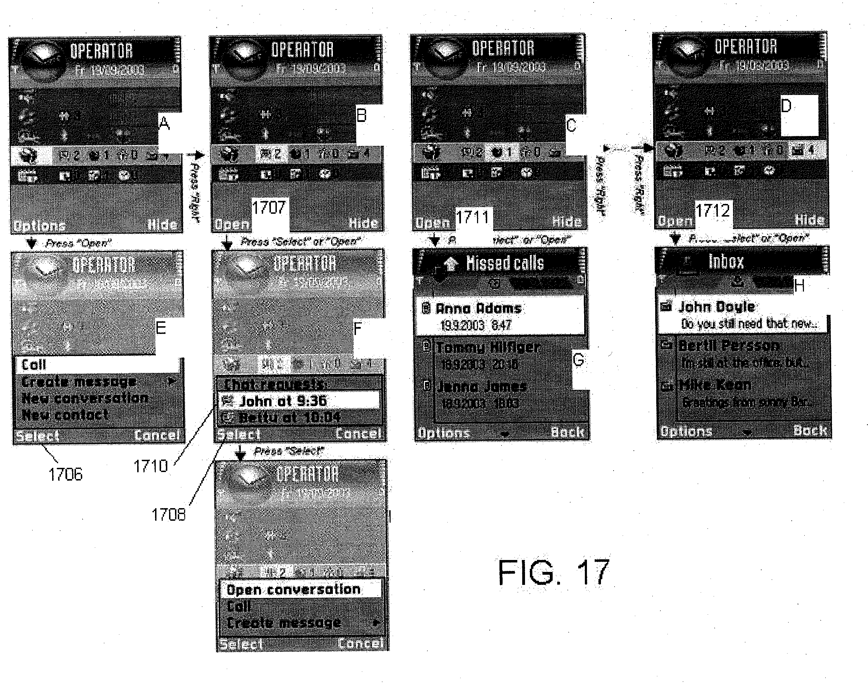

FIGS. 17A-17I illustrates one embodiment of a simplified user interface system incorporating features of the present invention for a mobile telephone. In this embodiment, the visible display area has been scaled down to accommodate or fit the size of the particular screen (e.g. "NOKIA S60"). As can be seen in FIG. 17A, the different stripes 1701-1705 are distributed along substantially horizontal lines. The user can move or switch between and among the individual stripes by moving the joystick, cursor or other pointing device right/left instead of up/down. Pressing or activation of the select/open option or function activates a menu point. Another keypress right can open a menu stripe. Depending on the layout of the particular device, left/right menu options can be substituted with up/down options.

For example, while in the screen shown in FIG. 17A, pressing the "right" key selects the stripe 1702 as illustrated in FIG. 17B. Further "right" key presses will select stripe 1703 or 1705, as shown in FIGS. 17C or 17D, respectively.

If while in the screen illustrated in FIG. 17A, the user activates or presses the "open" function, the functions associated with the stripe 1702 can be displayed, as shown in screen 17E. FIG. 17F illustrates the functions associated with stripe 1702 of FIG. 17B when "Select" or "Open" 1707 is activated. While in the screen shown in FIG. 17F, further functions and options can be accessed when a feature or task item 1710 is selected, and the "Select" option 1708 is activated.

FIG. 17G illustrates the functions associated with stripe 1703 of FIG. 17C when the "Select" or "Open" function 1711 is activated. Similarly, FIG. 17H illustrates the functionality associated with stripe 1705 of FIG. 17D, when "Open" 1712 is activated.

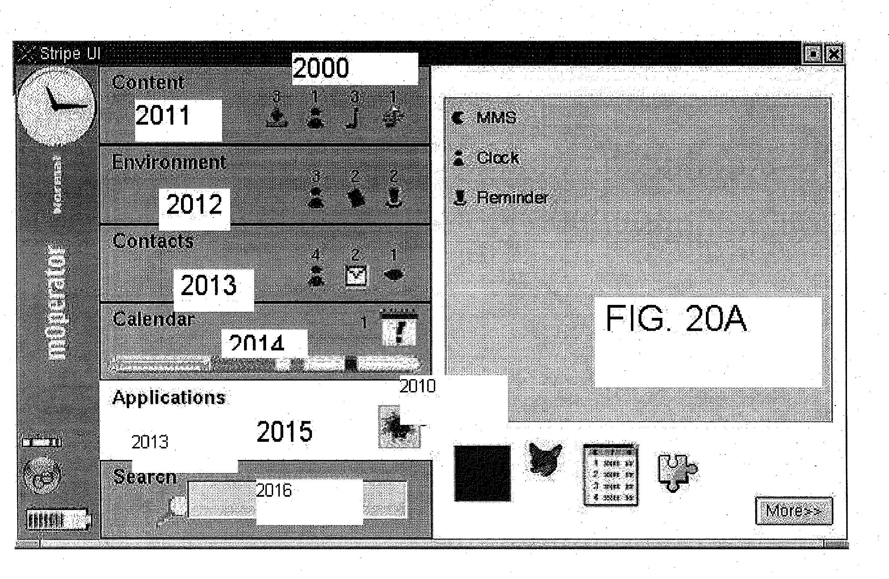

The user interface of the disclosed embodiments divides information into categories. As shown in FIG. 20A these categories can include for example, content, environment, contacts, calendar and applications. Users select a category to view the corresponding information, also referred to as zoom levels. Selection of a category is generally done using a pen or stylus on a touch screen.

A feature of the present invention is the ability to view needed information based upon the relations among the information and categories. One example of this is described for example in U.S. Patent App. No.__________________, filed on July 11, 2005, entitled CUTE UI, the disclosure of which is incorporated herein by reference in its entirety.

Referring to FIG. 20A when viewing an item in a' user interface of the present invention, the user can easily search for and find information that is related to the item that is being viewed. The user selects an item or any contents in the item, such as words in a SMS or file and drag it, into the stripe that is desired to be searched. Any information related to the selected item that is found in the stripe can then be displayed.

For example, as shown in FIG. 20A, each summary stripe area 2011-2016 can include blocks or icons, each of which represent different functions. In one embodiment the blocks will represent functions that are commonly used. For example, the "MMS" block 2010 in applications stripe 2015, represents "Sending a multimedia message". Selecting the MMS block 2010 and dragging the MMS block 2010 into a different stripe means searching for information related to the MMS block 2010 in the different function or stripe. Dragging the selected item 2010 into the "other area" 2016 instead of a specific stripe will search for information related to the selected block or item 2010 in all stripes or functions.

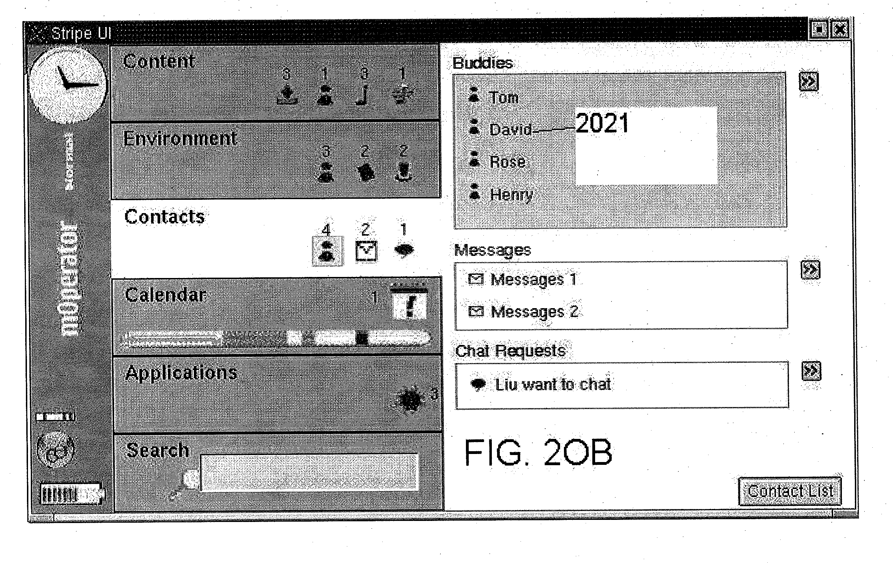

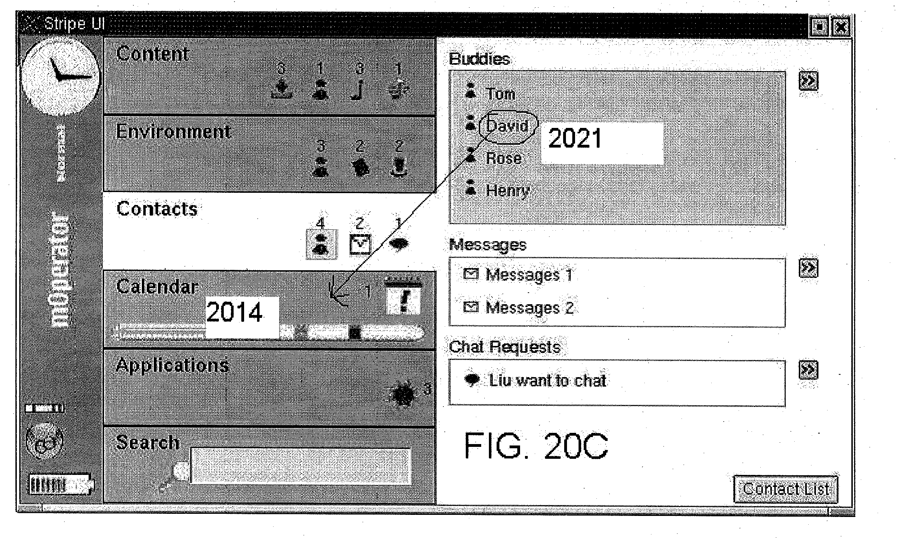

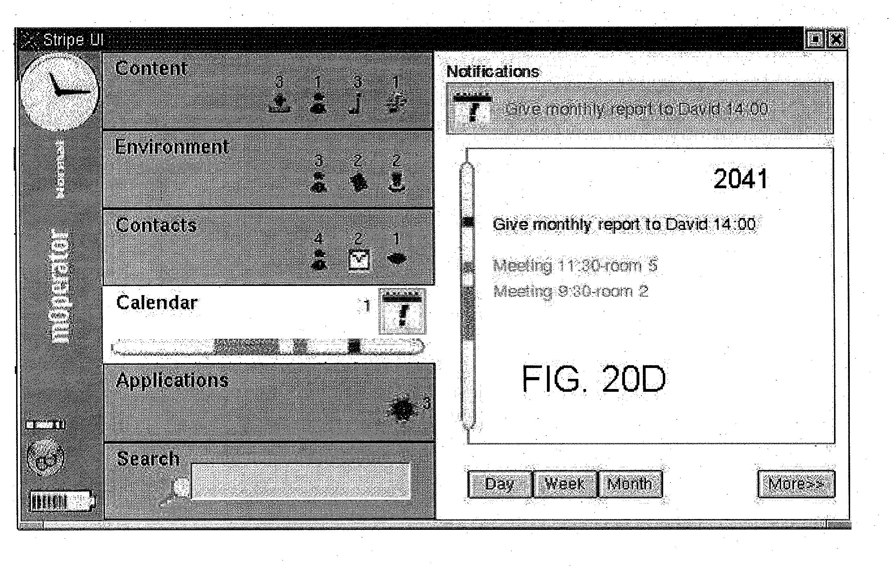

For example, referring to FIG. 20B, a user is browsing in the contacts area or stripe 2013. In the contacts area 2013 there is an entry for "David" 2021. The user can select the object David 2021 and view the personal information related thereto. If for example, the user wishes to identify any tasks related to David 2021, the user can select or highlight the item or object 2021 corresponding to "David" and "drag" it in any conventional manner, into for example, the calendar stripe 2014 as shown in FIG. 20C. The calendar function or system of the device incorporating the user interface of the present invention will search that function for "David" and list any task or other information that is associated with or related to the object "David" 2021. In FIG. 20D, the area 2041 of the user interface displays the information and tasks associated with "David" from the calendar function 2014 that are found.

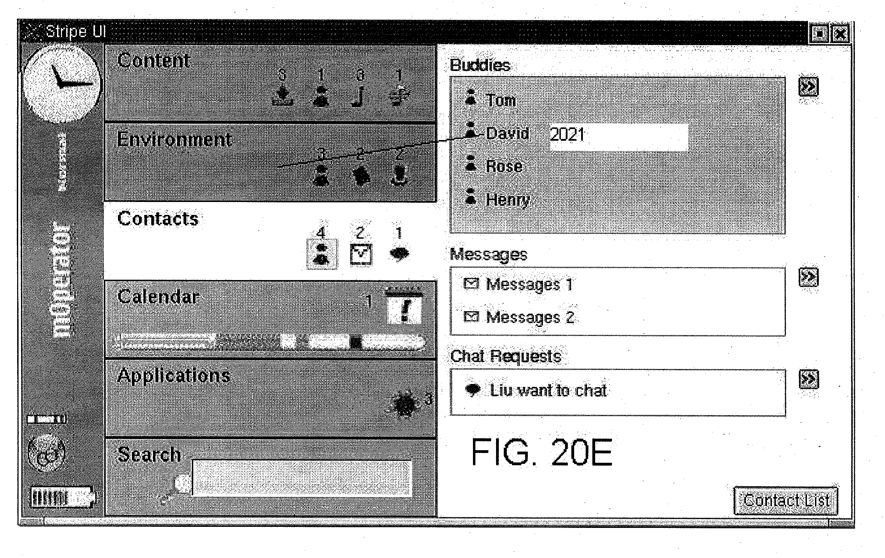

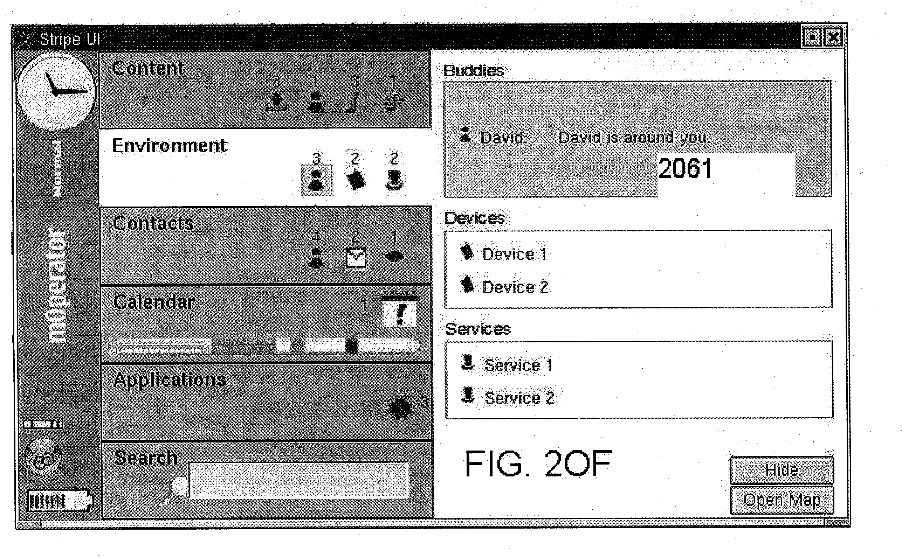

Referring to FIG. 20E, the user returns to the Contacts stripe 2013. If the user wishes to determine if the contact or buddy "David".2021 is available or in a pre-determined area or proximity, the user drags the item or object associated with "David" 2021 into the environment stripe 2012 as shown in FIG. 20E. The system then searches the Environment function for "David" 2021 and informs the user whether "David" is available as shown in FIG. 20F. The term "available" generally means that the individual, or a device associated with that individual, is in communication with the system incorporating the user interface, or within a pre-determined area or location. For example, if the user is searching for "David" 2021 the system incorporating the user interface of the present invention could identify at least an approximate location of a mobile communication device associated with "David", in any suitable or known matter. From the location information it can be determined whether "David" is within a pre-determined area or in the proximity of a certain location or the mobile device. If location information cannot be ascertained, "David" could be considered "unavailable". However, if "David" is located, as shown in FIG. 20F, an information bar or message 2061 might be displayed on the user interface to inform the user.

The embodiments of the present establish relationships between information stored in, or that is available to, the system. The information within the system is connected and related and the user can search and find related information easily and efficiently.

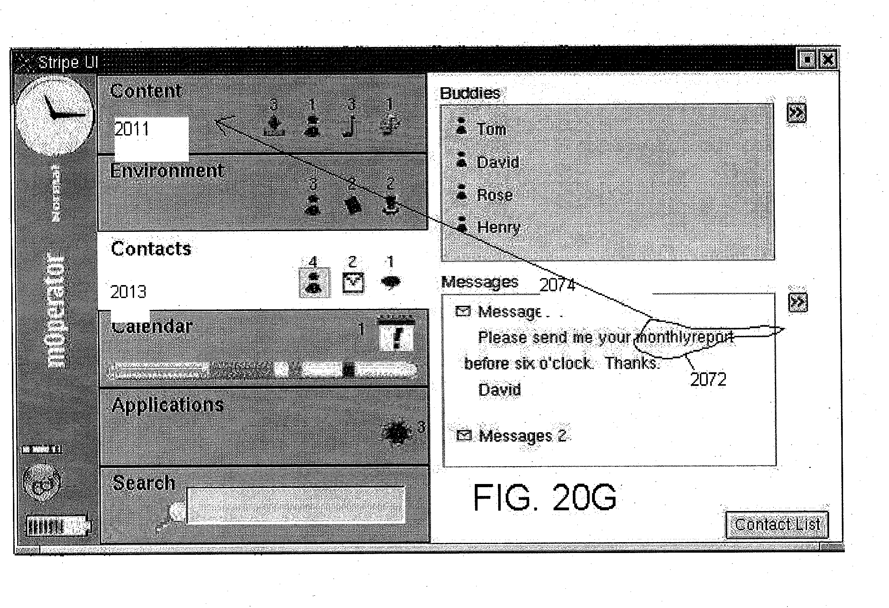

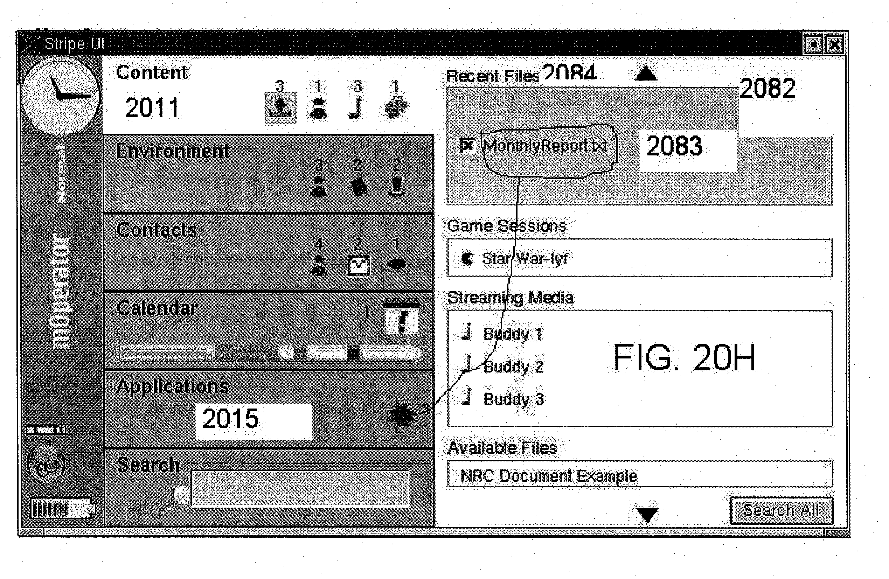

For example, referring to FIGS. 20G and 20H, the user is viewing information in the selected Contacts stripe 2013. The information displayed includes short messaging service messages 2074. "Messages 1" shown in FIG. 20G is a request for a "monthly report". The user selects the term "monthly report" 2072 in the SMS and "drags" it, as that term is commonly known, to the "Content" stripe 2011. The Content stripe 2011 includes access to information and files, stored in the device. When the text "Monthly Report" 2072 is dragged into the content stripe 2011, the system will search its data storage and saved content to determine if the file or data related or corresponding to "Monthly Report" is stored therein. If the file is listed, it will be displayed in the detailed information section 2082 related to the Content stripe 2011. In this example, showing FIG. 20H, the file "Monthly Report" 2083 is displayed in the Recent Files area 2084 of the Detailed information section 2082.

As shown in FIG. 20H, in order to send or transmit the file "Monthly Report" 2083 to the requestor, the user drags the Monthly Report 2083 object into the Applications stripe 2015. A multimedia messaging service ("MMS") function can be selected to send the Monthly Report 2083 file. In alternate embodiments, and suitable method or application can be used to send the file.

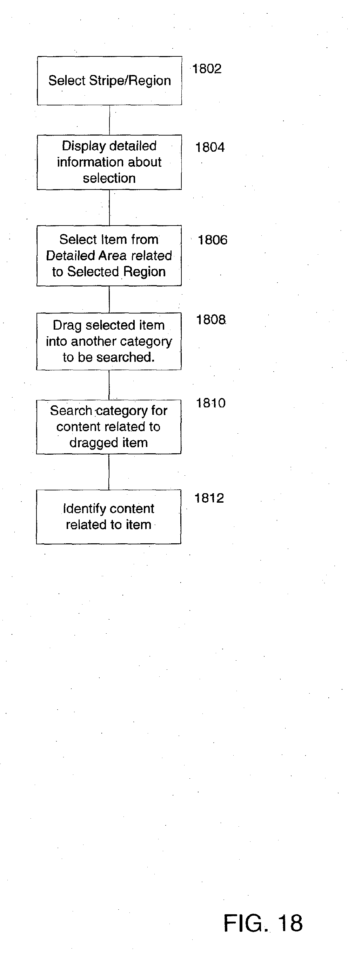

FIG. 18 illustrates one embodiment of a method incorporating features of the present invention. In one embodiment, the user has selected a region/stripe 1802 and information and content related thereto is displayed 1804. An item is selected 1806 from the detailed area and dragged 1808 into at least one other region. That region or regions is search 1810 for information and content related to the item. Any information or content found can be identified and displayed 1812.

The user interface of the disclosed embodiments also provides the ability to search the information stored in the mobile platform. As shown in FIG. 2A, the user interface 200 provides categories of information or functions, which can be divided into, for example, environment 210B, contacts or people 210C, calendar 210D, contents 210E and applications 210F.

The user selects any one of the category areas or stripes 210 to access the function and view the corresponding information related to the selected category in the detailed information section 220.

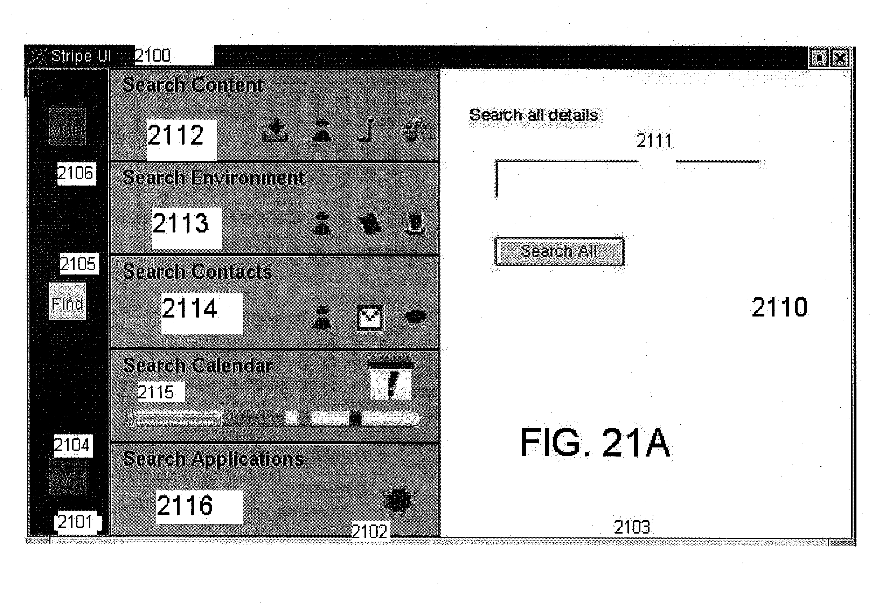

Referring to FIG. 21A, the user interface of the present invention allows for searching for information in the stripe categories, individually or as a whole. The user can also view the related information found as a result of a search. For example, as shown in FIG. 21A, one embodiment of the user interface 2100 of the present invention generally includes three main areas. These areas can include a system area 2101, a category or "stripes" area 2102 and a detail area 2103. The system area 2101 generally includes three selection icons or objects that serve as access ways or range ways to underlying functions and applications of the system. In alternate embodiments the system area 2101 can include any suitable number of icons corresponding to underlying system functions. In the example shown in FIG. 21A, the system area 2101 includes soft keys for "SYS" 2104, "Find" 2105 and "Main" 2106.

The stripes area 2102 is used to select and display a particular information category (210A-210F of FIG. 2). Information related to a selected category is displayed in the detail area 2103. Movement and navigation among the icons can be in any suitable manner, including a joystick or keypad. Referring to FIG. 1B, keys or cursor functions such as "ok", "back", "up", "down", "Left" and "right" can be located on a keypad 330 of the mobile platform.

Referring to the embodiment illustrated in FIG. 21A, a method of searching for information in the user interface of the present invention is illustrated. The "Find" selection object 2105 in the system area 2101 provides the entrance to the searching function. When "Find" 2105 is selected the screen 2110 is displayed on the user interface 2100. With this searching user interface, the user can search all of the categories of information in the stripes area 2102, or can search any category separately. When search results are listed, users can view other information related to the search results. For example, to search all of the categories of information in the stripes area 2102, the search term or criteria is entered into the area 2111. The search results can be displayed in the detail area 2103.

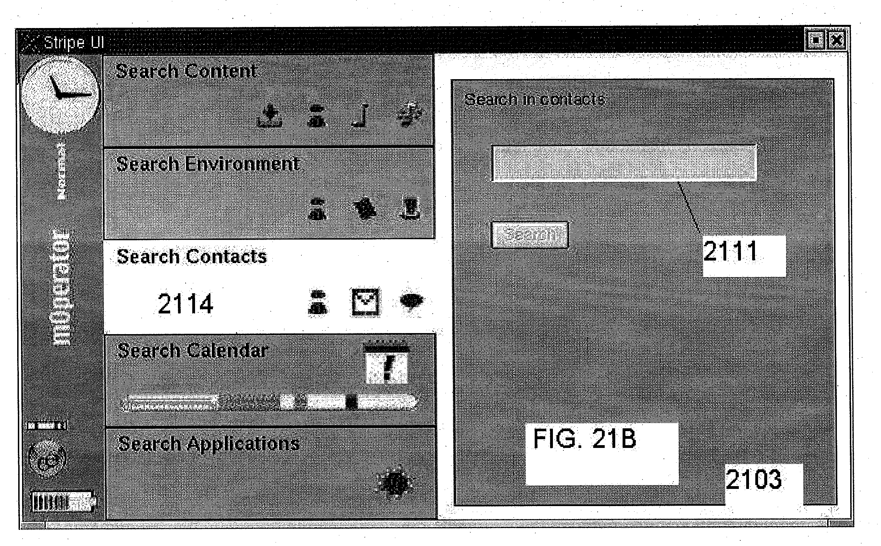

Referring to FIG. 21B, the user wishes to search the contacts area for the telephone number or other contact details related to the contact. The Find 2105 function has been activated and the search contacts stripe 2114 is selected. In the detail area 2103, a search criteria input area 2111 is provided to enable the user to enter the search criteria.

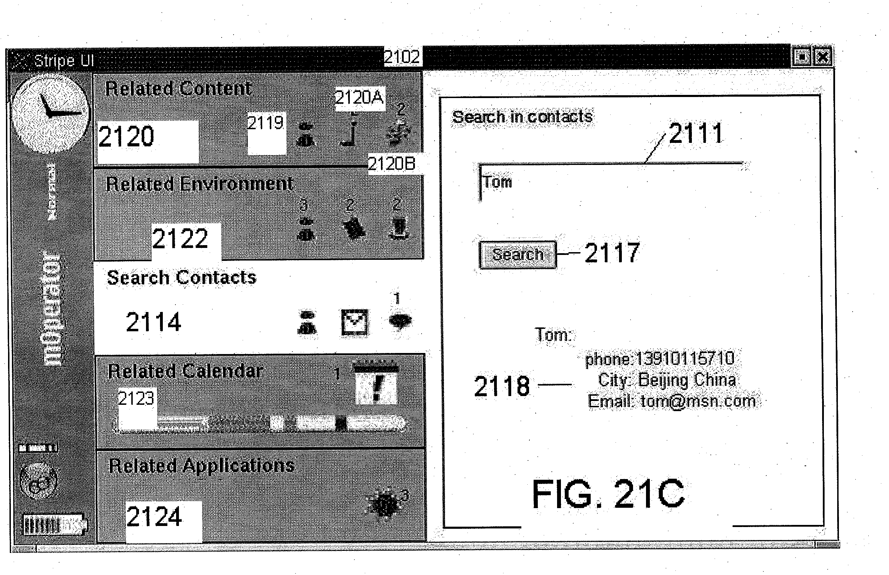

The user then enters the detail area 2103 to input the search term or criteria in the field 2111. As shown in FIG. 21C, the search term "Tom" is entered in area 2111 and the search function or button 2117 is actuated. The results 2118 of the search can be displayed on the user interface. The other categories in the stripes area 2102 that are not selected as the primary search area will be displayed as "related". If any information related to the search criteria is identified in the "related" categories 2120, 2122, 2123 and 2124, this information can be displayed in the respective stripe. For example, the numbers over the different icons 2119 on each stripe 2120, 2122, 2123 and 2124, indicate the number of each indicated item that have been found that are related to the search criteria "Tom".

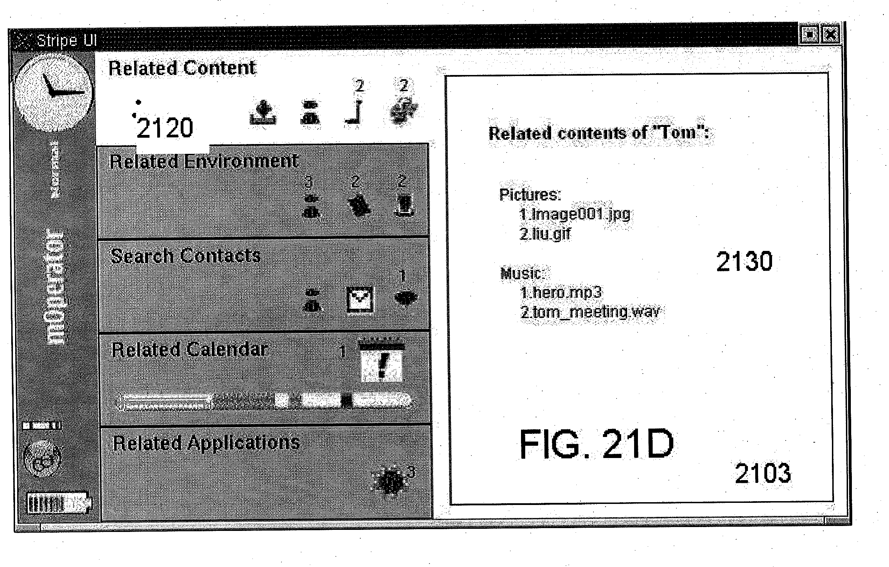

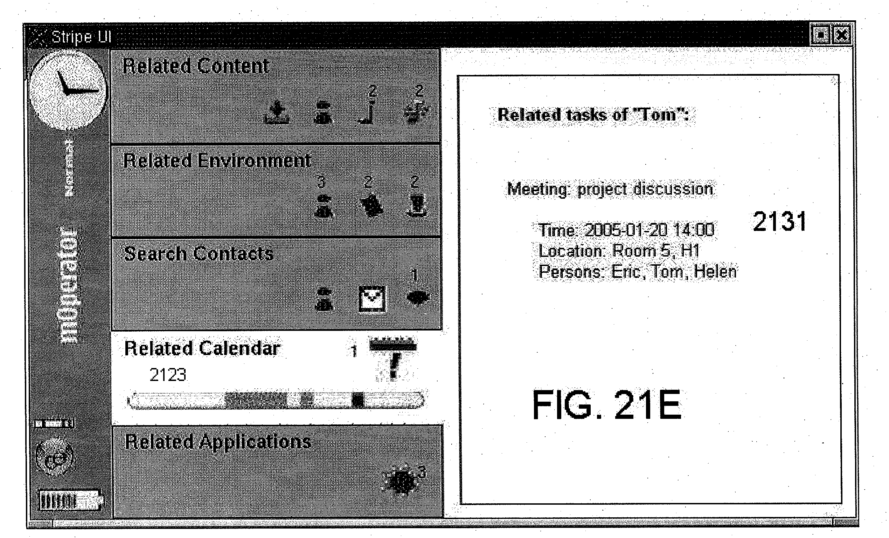

For example, by searching the contacts area 2114 for "Tom", the corresponding telephone number and other contact details are displayed in area 2118. The "Related Content" area 2120 indicates that information related to "Tom" has been found, as seen by the icon 2120A and 2120B. Referring to FIG. 21D, if the user selects the "Related Content" stripe 2120, the information 2130 in stripe 2120 that is related to "Tom" is displayed. Similarly, the Related Calendar stripe 2123 shows at least one item 2123A has been identified in the category 2123 during the search that is related to "Tom". As shown in FIG. 21E, the user can select or move directly to the Related Calendar category 2123 to view the meeting information 2123A that has been indicated.

As discussed previously, navigation among the different areas, regions and icons of the user interface 2100 of FIGS 21A-21E, can be with any suitable navigation tool, such as a stylus for a touch screen or a multi-position cursor device. A soft key device that changes functionality depending on the mode of the user interface could also be used.

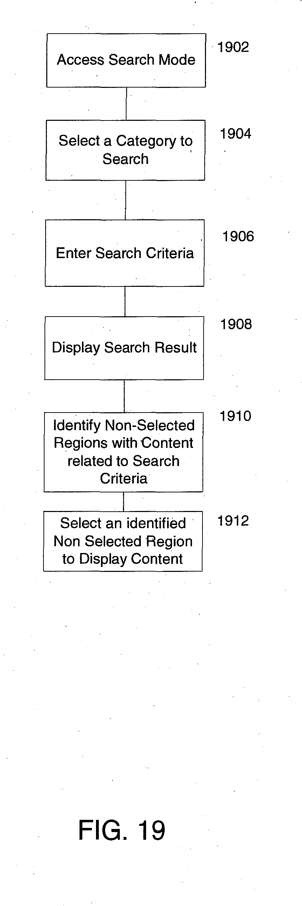

FIG. 19 illustrates one embodiment of a process incorporating features of the present invention. In one embodiment, the search mode of the user interface is activated 1902. A category or stripe in which content is to be searched is selected 1904. The search criteria is inputted 1906. The search is run and results displayed 1908. Any non-selected regions that have content related to the search criteria are identified or highlighted 1910. To view the content in a non-selected region, the "related" information region is selected 1912.

The disclosed embodiments can also include an idle screen for the user interface. As is known in the art of user interfaces, during a period of inactivity, or non-active use, a user interface or display can revert to what is commonly referred to as an "idle" mode. In an idle mode, "wall paper", a screen saver or other image might be present on a predominant portion or section of the display screen. In the embodiments of the present invention, the user interface can enter what might be referred to as an "Active Idle" mode, where a preferred screen saver or image is displayed, but the functionality and modes of the user interface remain at least partially visible and active.

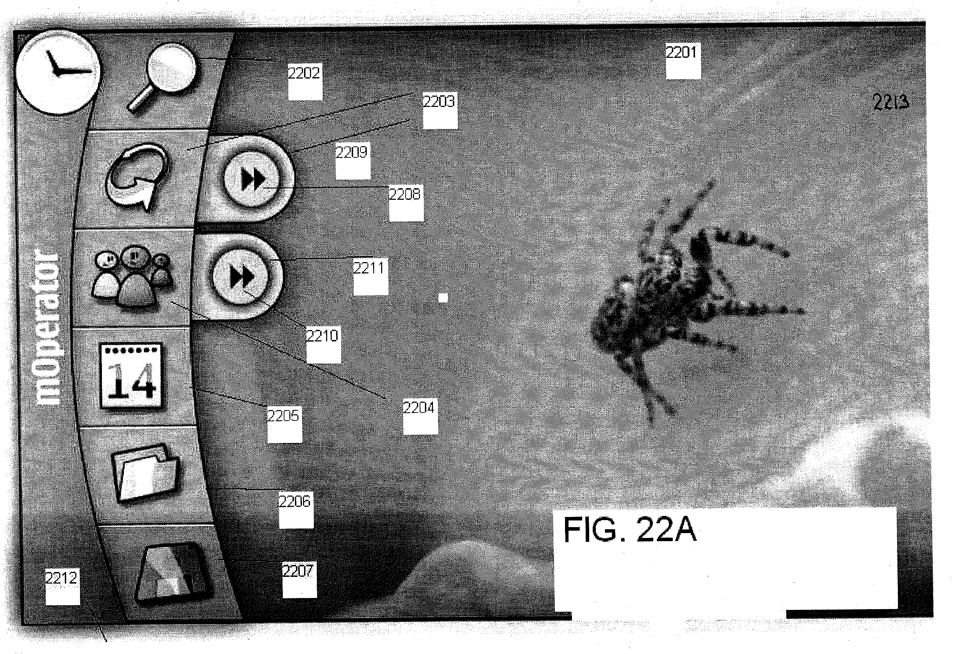

For example, referring to FIG. 22A, one embodiment of an active idle screen 2201 incorporating features of the present invention is illustrated. In one embodiment, the active idle screen 2201 displays icons 2202, 2203, 2204, 2205, 2206 and 2207 that generally correspond to, or are related to, categories of information that is or can be made available to the user or operator. For example, the icons 2202, 2203. 2204, 2205, 2206 and 2207 shown in FIG. 22A are general representations of the icons 210A-210F of FIG. 2A. These categories generally include the functions and modes previously described, which can include for example Search 2202, Environment 2203, People 2204, Calendar 2205, Content 2206 and Applications 2207. The icon, image or graphic that is used to represent the respective category or function associated with each icon 2202-2207 can be in any desired or suitable form and the scope of the present invention is not to be limited by the exemplary display of FIG. 22A.

The icons 2202-2207 of FIG. 22A are generally reduced in size from the icons or stripes of FIG. 2A in order illustrate to represent an active idle state of the user interface of FIG. 2A..To save screen space during the idle mode and enhance "wallpaper" visibility, the category appearances can be reduced to icons or images of a minimal or any desired size. It is a feature of the present invention to permit basic management of incoming events while the device is in an idle state through customization and scalability, and provide a direct link to the selected event in the active state of the user interface from the idle state.

As shown in FIG. 22A, the images, icons and category appearances are reduced in size relative to the embodiment of the stripes 210A-210F shown in FIG. 2A, to save screen space and enhance the wallpaper visibility in the idle mode of the device. The icons 2202-2207 include an icon or image that is representative of the underlying application or category. The remaining screen space 2213 can then be made available for the wallpaper, for example. In alternate embodiments the remaining screen space 2213 can be used for any suitable purpose, including the display of text or images, or other applications, such as games, for example.

Although the categories of FIG. 22A are reduced in appearance, as soon as a new event is detected by the device, the detection of, or the occurrence of the event is signalized on the idle screen by a notifier or notification. For example, in one embodiment, referring to FIG. 22A, if an event or action is detected or occurs with respect to any one of the categories 2202-2207, a signal can be represented by an indication or notifier 2209, 2211. The notifier can be displayed in location that allows the user to connect or relate the notification to the corresponding category. For example, as shown in FIG. 22A, the notifiers 2209, 2211 are substantially adjacent to, or can be viewed as an outgrowth of, the respective category to which each corresponds. In alternate embodiments, the notifier can appear in any suitable location on the display 2201 as long as the user can recognize the notifier as corresponding to a certain category. For example, in one embodiment, the notifier may appear anywhere on or within the area of the display with text or an image that relates the notifier to the corresponding category for which it is providing the notification.

For example, in one embodiment, when a new "message" or incoming call is detected or received in relation to the People category 2204, the notifier 2211 is activated and displayed. The notifier 2209 indicates that an event is occurring or has occurred with respect to the Environment category 2203.

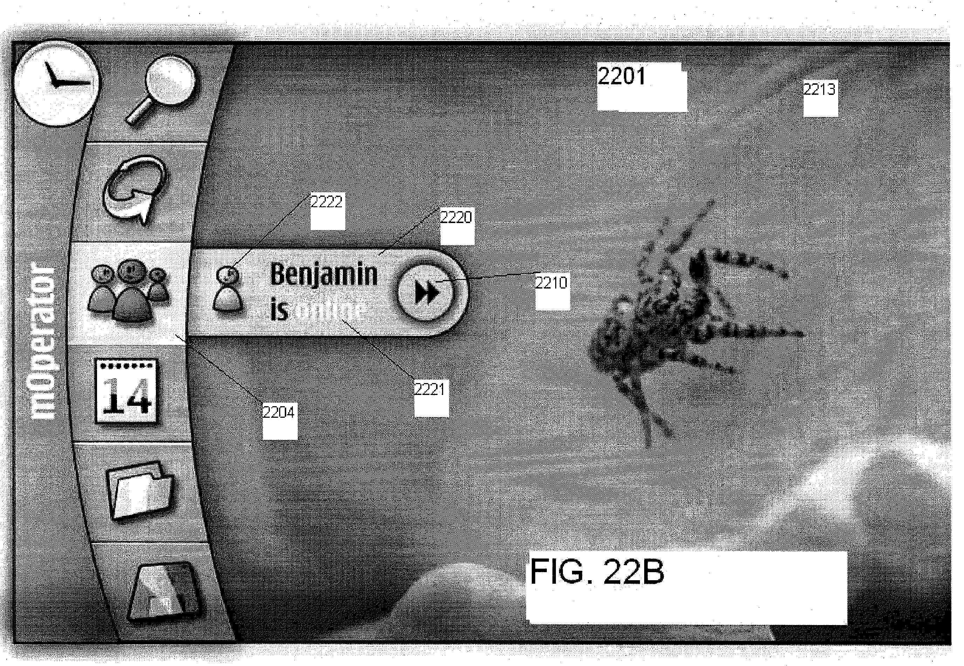

The notifiers 2209 and 2211 generally comprise an icon that includes a pointer 2210. In alternate embodiments, any suitable image or icon can be utilized for a notification. FIGS. 22B-22I illustrate further examples of possible notifiers.

In one embodiment, referring to FIG. 22B, the notifiers 2209 and 2211 of FIG. 22A can have a reduced state and an expanded state. For example, as shown in FIG. 22B the notifier 2211 of FIG. 22A is shown in an expanded state 2220. The expanded state 2220 could include further details and information related to the event for which it is providing a notification. As shown in this example, the notifier 2210 of FIG. 22A indicates that an event has occurred in the People or Contact area 2204. In the expanded state 2220, the notifier indicates that the event is that "Benjamin is online." The expanded state 2220 could be of any suitable shape and size needed to display the desired information. Aspects of the notifier could, be highlighted in any suitable manner, including for example, size, font or color. The user can customize the appearance, as reflected in the examples shown in FIGS. 22B-22I.

In one embodiment, the expanded state 2220 could occur automatically, coinciding with the occurrence of an event or initial notification or within a predetermined time thereafter. For example, if the presence of a contact from a contact list associated with the People category 2204 is detected, the notification 2211 of FIG. 21A can initially be displayed. Within a period of time following the event or initial notification, the notification 2211 could expand into the expanded state notification 2220 of FIG. 22B. This could occur automatically or upon an action by the user.

For example, following the display of the notification 2211 some action by the operator may be required to cause the notification 2211 to expand to the expanded state notification 2220 of FIG. 22B. This could include, for example "clicking" on any portion of the icon or image of the notification 2211, such as for example, the pointer 2210. In alternate embodiments, any suitable activity or actions could cause a reduced state notification to change to an expanded state notification. For example, in one embodiment the presence of the pointer icon 2210 indicates the availability of further information related to the notification 2211. Clicking or acting on the pointer icon 2210 in FIG. 22A causes the expanded state 2220 to be displayed as shown in FIG. 22B.

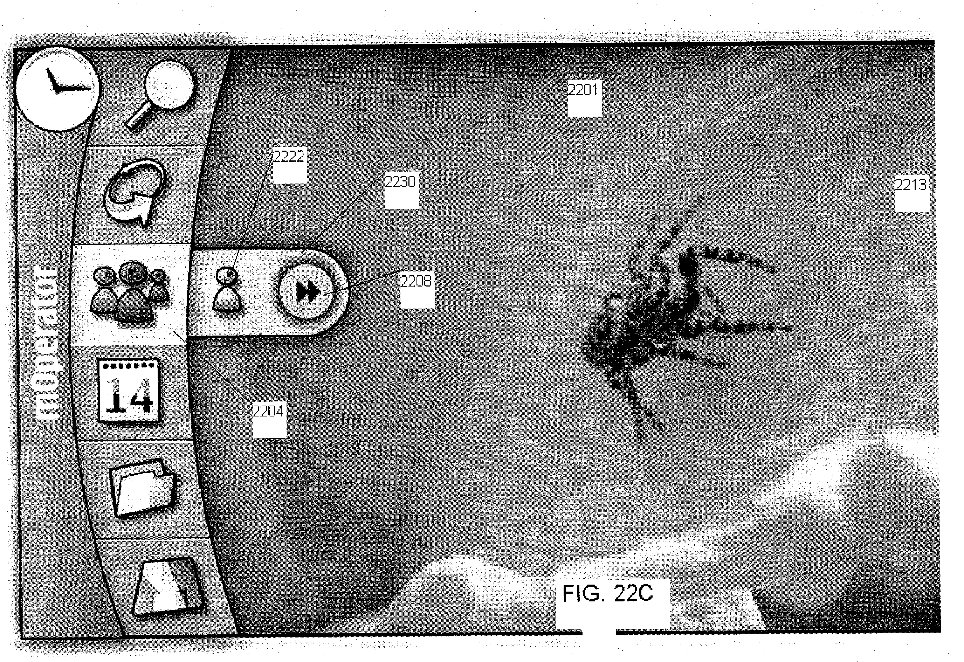

In one embodiment, the notification in the expanded state 2220, shown in FIG. 22B, can change state back to another reduced state after a pre-determined period of time, such as the notification 2230 of FIG. 22C. For example, referring to FIG. 22A the system incorporating the user interface of the present invention detects an online presence of a contact. As shown in FIG. 22A, the notification 2209 associated with the "People" category 2204 appears on the display 2201. Either automatically or after an action by the user, the notification 2209 changes state to the expanded state ₂₂₂₀ of FIG. 22B. As shown in FIG. 22B, the expanded state 2220 provides further information about the event to the user, i.e. that "Benjamin is online". As shown in FIG. 22B, the term "online" is highlighted to more specifically identify the event. After a pre-determined period of time, for example, approximately 15-3-0 seconds, the notification 2220 of FIG. 22B changes state to the reduced contact online notification 2230 shown in FIG. 22C. In one embodiment, the reduced notification 2230 can be generally the same as the notifier 2211 of FIG. 22A. As shown in FIG. 22C, the notifier 2230 provides an indication, via icon 2222, of the type of event. Generally, the reduced contact online notification provides information as to the type of event and the number of occurrences of the event, in each category of event that correspond to the function. For example, the icon 2222 in the reduced contact online notification 2230 indicates that in the People category 2204, one contact is online. In alternate embodiments, the reduced notification could provide any suitable or desired information related to the event.

Referring to FIG. 22A, the notifications 2209 and 2211 indicate that events have occurred in two categories, namely Environment 2203 and People 2204. In one embodiment the categories 2203, 2204 could be highlighted by a change in color or appearance, upon the occurrence of an event or notification. Generally, any desired change could take place to accentuate the occurrence of an event, including for example, an audible or mechanical notification, such as a sound or vibration.

For example, in one embodiment, referring to FIG. 22B, the category icon 2204 is highlighted and the expanded icon 2220 is also highlighted, with the text "online" 2221 highlighted in a color that is different from the remaining text. In FIG. 22C, the category icon 2204 is highlighted, and the reduced notification icon 2230 is highlighted, for example in a different color, hue or font, to inform the user that the contact is online. The presence of arrow icon 2208 indicates that further information about the event is available or that the notifier 2230 can be expanded.

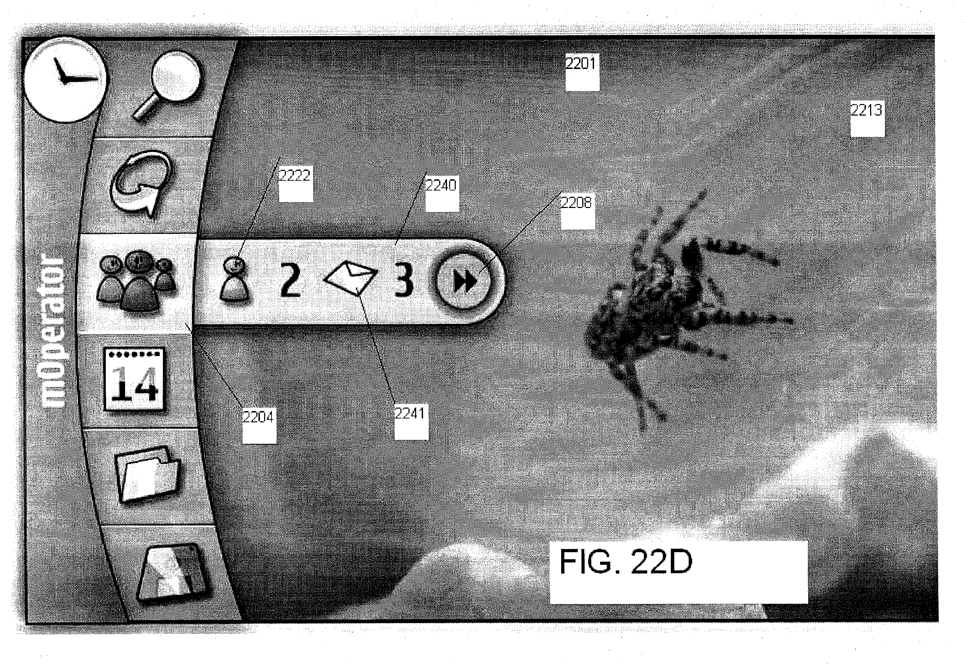

FIG. 22D illustrates another embodiment of a notifier 2240 related to the contacts category 2204. As shown in FIG. 22D, the icon 2240 displays a number of events occurring in different subcategories. For example, the icon 2222 corresponds to a number of contacts (2) that are "online". The notification 2240 shows that "2" contacts are online. The exemplary icon 2241 in the fashion of an envelope, can indicate the presence of a mail message or messages (3). In this example, the numeral "3" adjacent to the icon 2241 indicates that three mail messages that have been received in this category. The notification 2240 can expand if other events in other subcategories occur and reduce in size or appearance if events discontinue (i.e. an online contact goes offline) or are acted on by the user. The notifier 2240 can also be reduced to a reduced state upon action by the user, for example clicking on indicator 2208, or automatically. In one embodiment, the indicator 2208 may reverse in direction to show that action upon it will cause it to reduce state.

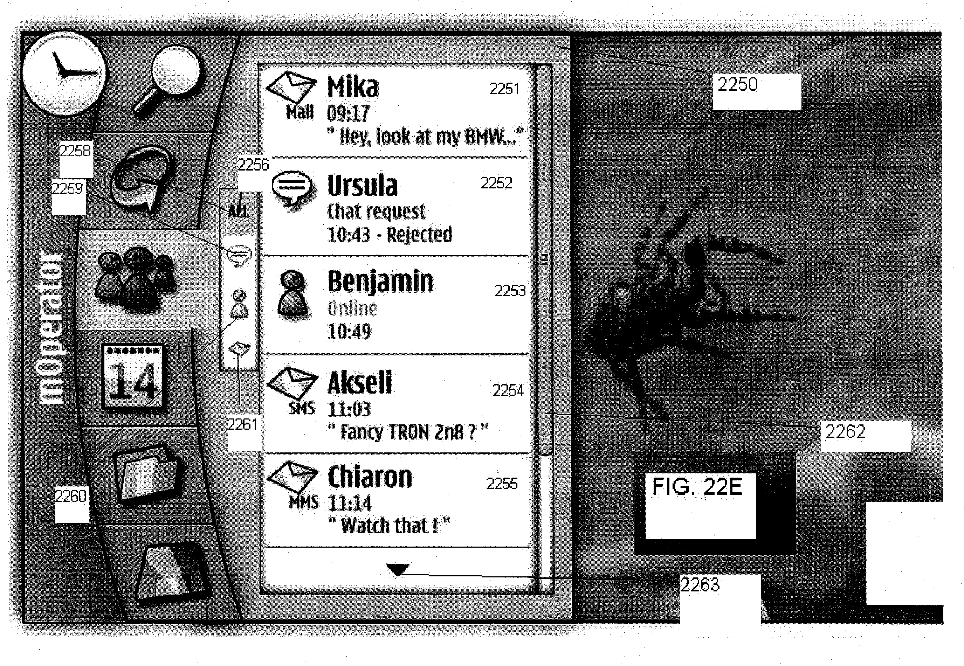

In one embodiment, the notification 2211 of FIG. 22A can be expanded to provide detailed information related to the notification. For example, referring to FIG. 22E, if the user for example "points and clicks" on the category 2204 of FIG. 22A, the list 2250 of events can be displayed that provides detailed information related to each event. A list of icons 2256 can also be displayed that can allow the user to filter the display of the categories of events. In the example of FIG. 22E, the icon 2258 for "ALL" events is highlighted and selected so that all of the events occurring in the category 2204 are displayed in the list 2250. If the icon related to, for example, the sub-category 2260 was selected, only the "online contact" events associated with the sub-category 2260, such as event 2253 would be shown. A scroll bar 2262 or other such similar device can be provided to allow the user to scroll or navigate the different events, which can also provide an indication as to the total number of events that can be viewed. Any suitable means can be used to select or scroll to an event in the list 2250, such as for example a graphical user interface pen or mouse. The icon 2263 can also indicate that there are more events can be viewed in the list being displayed.

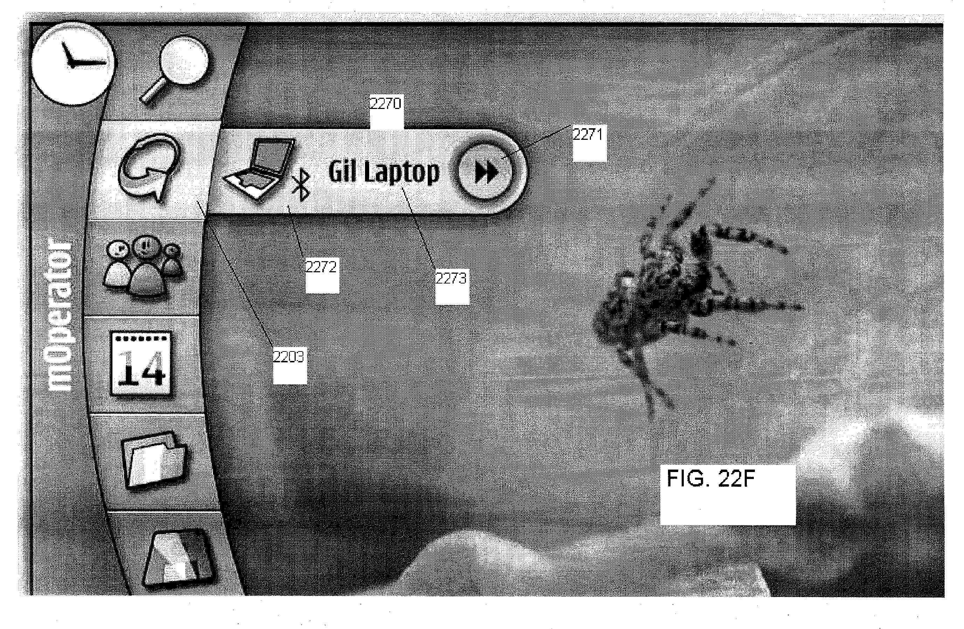

FIG. 22F illustrates another example of a notifier 2270 related to the environment category 2203. Referring to FIGS. 22A and 22F, the device detects the occurrence of an event in the environment category 2203. The notification 2209 appears on the display 2201. The notification 2209 can then change to the expanded state 2270, with the category 2203 being highlighted in some fashion. The information in the expanded notification 2270 indicates that a network device 2272 identified as "Gil laptop" 2273 is detected and can also indicate the type 2272 of connection (e.g. "Bluetooth"). In alternate embodiments, any suitable indications, icons and information types and description can be displayed. The arrow 2271 can indicate that more detailed information is available to be displayed and viewed. As noted earlier, the arrow 2271 can be an active or dynamic icon.

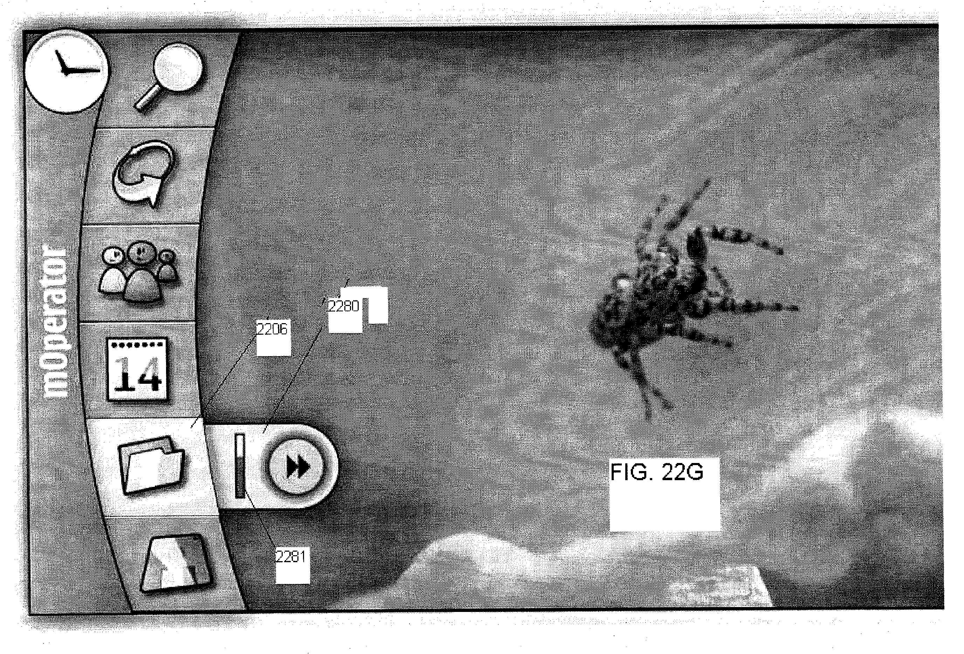

FIG. 22G illustrates an example of a notifier 2280 pertaining to the content category 2206. In this example, the indication or icon 2281 could indicate the presence of a pending or available action, such as for example an "MP3" playback. In the example shown in FIG. 22G, the icon associated with the category 2206 is highlighted to indicate the presence or activation of an event. The icon 2281 is displayed to represent the subcategory or the nature or type of event. In one embodiment, the color could change for example, to correspond to the media type, the user being aware of or able to determine the media type from the icon or indication. The content notification icon 2280 in FIG. 22G is shown in a minimal or minimized state. The icon 2280 could remain displayed as long as the content remains available or some other action by the user takes place.

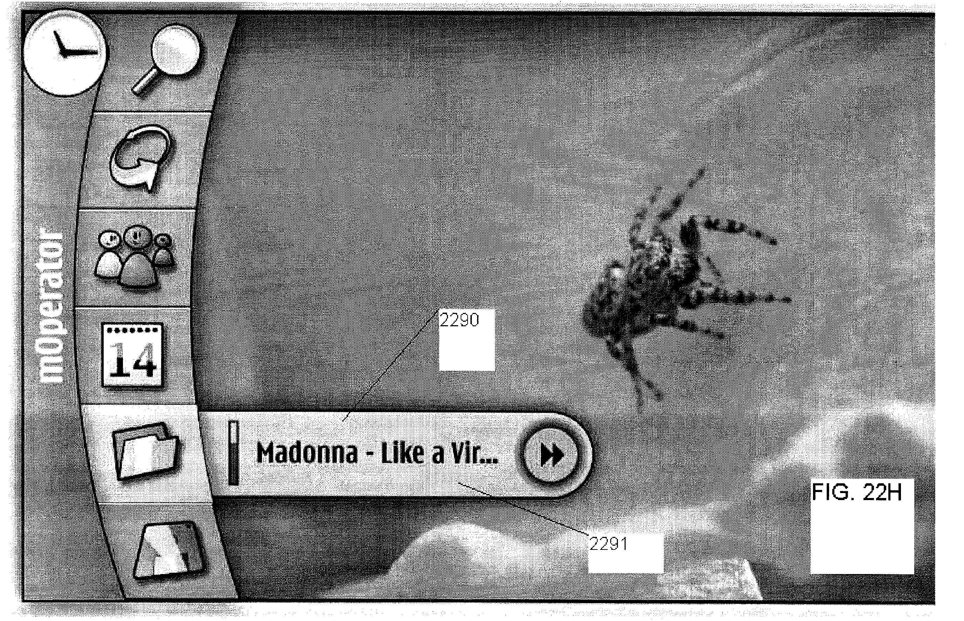

FIG. 22H illustrates the content notification icon 2280 that has been expanded to a more detailed state 2290. In this example the title 2291, or portion thereof, of the particular content is displayed. The description and amount of information that is displayed in the notification 2290 can be customized by the user to display any desired information in any particular form, image or image type.

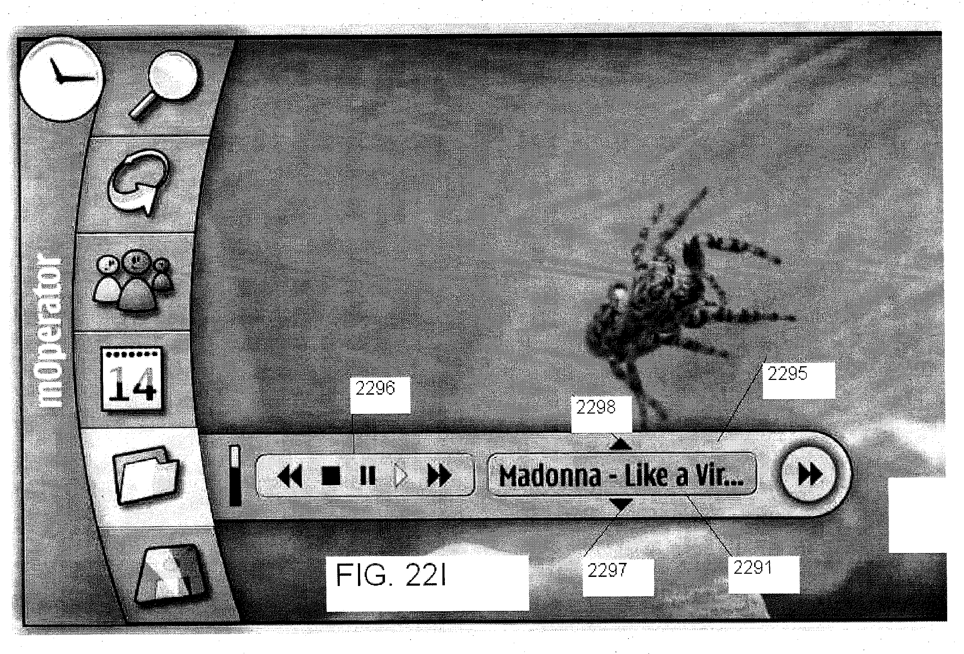

FIG. 22I illustrates the notifier 2290 of FIG. 22H expanded to include further information. Active or dynamic icons can also be shown in relation to the notifier 2295. For example, controls 2296, that will allow the user to play the content, are displayed. Arrow indicators 2297 and 2298 might allow the user to view more details about the information, or text, in block 2291. The notifier 2295 could be set to appear when any key, or a particular key is pressed, when the device and user interface is in the idle mode and the notification 2280 appears. For example, if the device is a mobile phone, and in the idle mode with the keypad locked; the notification 2280 informs the user of an event in the content category 2206. When the phone is unlocked, the activation of a key, hand or soft, could cause the display 2295 to appear. The view of 2295 could remain permanently until closed by the user or remain only temporarily.

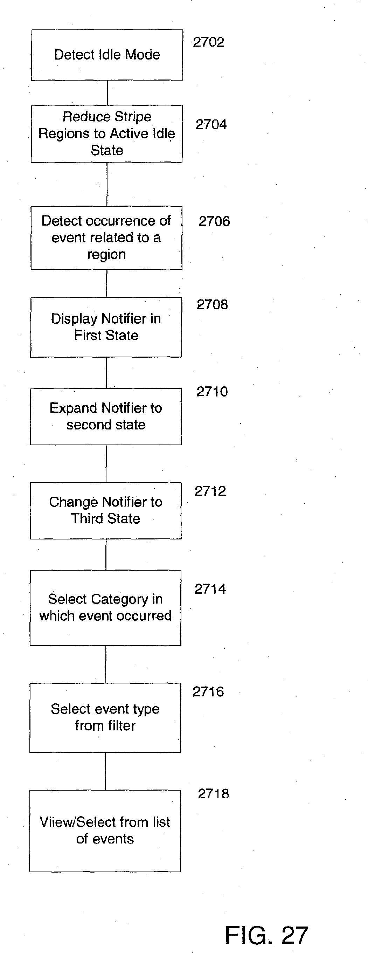

FIG. 27 illustrates one embodiment of a method incorporating features of the present invention. An idle mode of the device is detected 2702 and activated. The stripe regions are reduced in size to the active idle state 2704. The occurrence of an event related to a region is detected 2706. A notifier in a first state is displayed 2708 in conjunction with the region. The notifier then expands 2710 to a second state to provide more details related to the event. The notifier then changes 2712 to the third state with summary information related to the event. To view the event, the region is selected 2712. They type of event(s) desired to be viewed is selected 2714. A list of event(s) is displayed 2718 and can be acted on by user action or automatically.

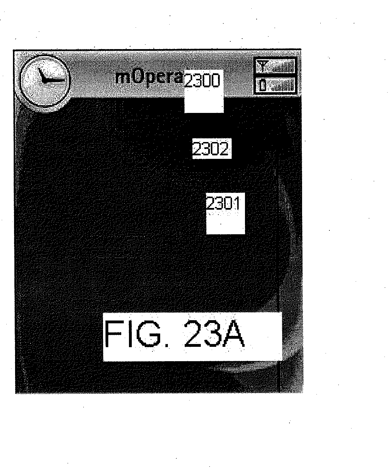

The embodiments of the present invention generally provide or display event notifications' or notifier for the categories 210 of FIG. 2A. These event notifiers can include for example, notifications of a new message, a BLUETOOTH ("BT") request, a "buddy" online, a missed call or an upcoming calendar event. Generally, a notification can be provided in response to the detection of an event occurring with respect to the functions and features of the device. Referring to FIGS. 23A-23F, in one embodiment, the user interface of the present invention displays or presents the event notifications on a timeline or on a buddy list. As shown in FIG. 23A, in one embodiment, the timeline can be presented as for example, a "string" or line 2302. The orientation of the string can be horizontal or vertical depending on screen size and layout. In addition, the string may be a straight or curved line. The geometric shape is not limited by the scope of the present invention. The size of the line may be approximately one pixel wide, depending on the size of the display or user preferences.

Initially, referring to FIG. 23A, the string 2302 has no objects on it and the user interface or display 2301 is clear of any notifiers. The display 2301 could show a background or other image if desired. A system area 2300 can be provided in a portion of the display area. Although the term "string" is used to describe this embodiment of the present invention, any suitable graphic image or icon can be used, including any suitable descriptive term.

In one embodiment, when the device including the user interface of the present invention detects that a new event is about to happen or has happened, the string 2302 starts to vibrate or move. In one embodiment, the frequency or vibration may depend on the importance of the event of how soon the event is about to become active. For example, the device may detect that a message is to be communicated. The device may react differently to the detection that a message is to be received and when the message is received.

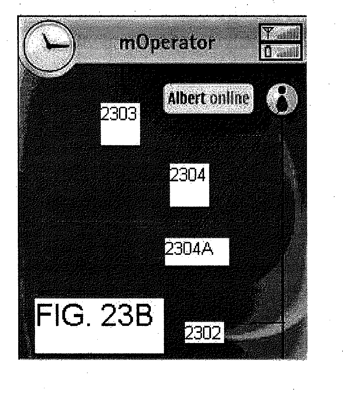

Referring to FIG. 23B, the detection or occurrence of an event by the device is indicated by the appearance on the screen of a notification icon, which in FIG. 23B is displayed as e.g. a bubble 2304. They type, size and shape of the notification icon 2304 is not limited by the example of FIG. 23B, and may comprise any suitable icon. As shown in FIG. 23B, the bubble 2304 contains within it a small icon 2304A that represents the event type associated with the notification.

In one embodiment, a portion of the icon 2304 begins to appears from the top part of the display screen 2301. The icon 2304 moves toward the other end of the line and more of the icon 2304 becomes visible until it is displayed in its entirety. As the icon 2304 becomes fully visible, a pop-up window 2303 can be displayed on the screen 2301 to provide the user with more detailed information about the event. The pop-up 2303 may contain (hyper) text, icons, images or other user interface components (such as for example, a progress indicator for showing the status of download). In alternate embodiments, the pop-up can include any suitable information. If the pop-up 2303 is associated with more than one event/object, the number of these objects can be displayed in the pop-up.

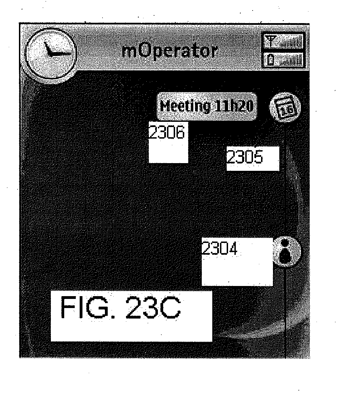

After a short time period (e.g. 1.5-3 seconds) the pop-up 2303 can disappear and only the bubble 2304 stays visible. The bubble 2304 can then start or continue to move to the other end of the string 2302. For example, the icon 2304 slowly appears on the screen 2301, going from a partial image to the full image as shown in FIG. 23B. When the full image appears, the icon 2303 appears alongside. The icon 2303 remains for a predetermined period and is then removed automatically. The icon 2304 then continues along the line 2302. The speed of movement of the icon 2304 may be for example, 1 pixel/min, although any suitable speed can be implemented. The object 2304 may also be moved in order to make room for another notifier 2305 as shown in FIG. 23C.

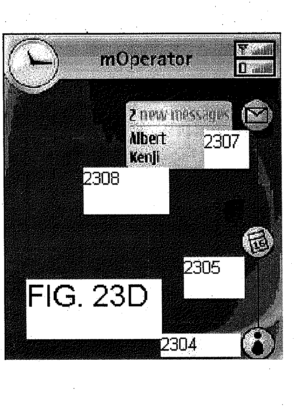

It may be the case that the screen 2301 already contains a notifier for a similar event that just became visible. Therefore, as the newer object starts to move toward the older notifier, the older notifier is moved toward the newer notifier and they are combined, e.g. notifier 2307 of FIG. 23D. If several events of the same type are combined, the diameter of the bubble 2307 can be increased to indicate the combination. As shown in FIG. 23D, the bubble 2307 has an associated pop-up window 2308, where it is indicated that two new messages have been received, and in which the name of the senders of the messages are indicated.

After adding a certain number of bubbles (depending on screen size) on top of each other, the string 2302 may become "over crowded". Therefore, it is possible to interlock or overlap bubbles in order to accommodate or fit a greater number of bubbles along the line.

When the event associated with the notifier is over (e.g. message has been read) or the user has explicitly closed the event, the bubble can "pop" or be removed from the display. In one embodiment, the notifier may vanish after the passing of a certain time period (e.g. 15 minutes) or the string may be filled by using a "first in-first out" method.

The user also has the possibility to interact with the notifiers with e.g., 5-way joystick or touch screen and stylus. The user can change the input focus to the string by using for example a left soft key. Then the user can scroll through the notifiers by using up and down keys. Selecting a certain event, the notifier, can open the associated event/object.

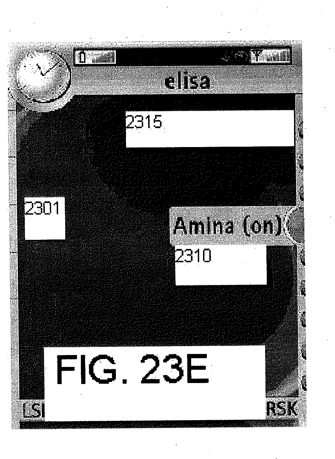

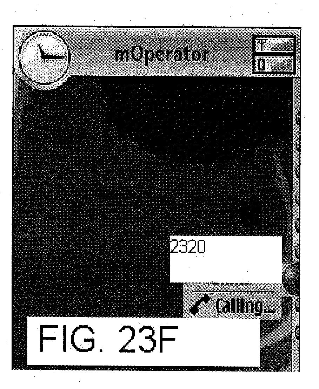

Figures 23E and 23F illustrate an alternative visualization, where the notifiers 2310, 2320 pop out from the border region 2315 of the display 2301 and withdraw back into the border region after a predetermined period of time.

These embodiments of the present invention generally require reduced areas of display screen real-estate, show temporal relations of the notification, and may provide a "soft notification" to the user by vibrating the timeline string. When a new event is notified, the pop-up can show more information via text/image/UI widget and it is possible to combine events in one notifier.

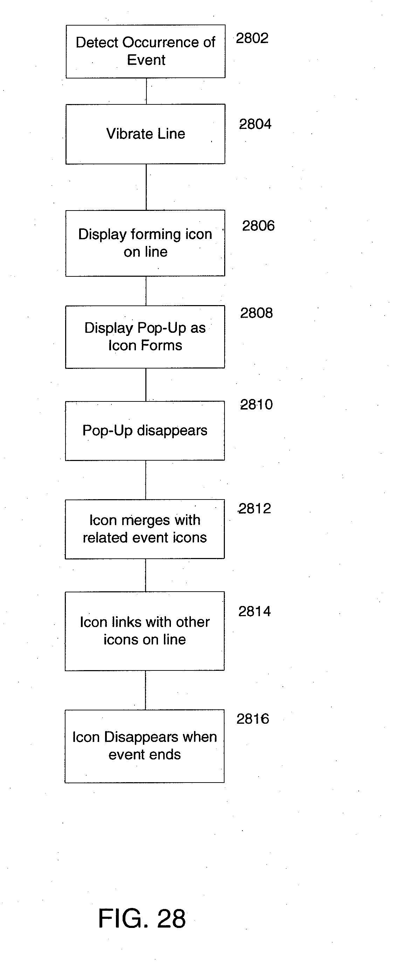

FIG. 28 illustrates one embodiment of a method incorporating features of the present invention. The occurrence of an event is detected 2802 by the device. A line on the display appears and begins to vibrate 2804. An icon starts to appear 2806 at one end of the line. As the icon moves along the line and appears in full, a pop-up window with information about the event appears 2808. After a pre-determined period, the pop-up disappears 2810. The icon continues to move along the line towards the other end of the line. If there are other icons for the same or similar types of events, the icons can merge 2812 to form a single icon for the type of event. Alternatively, the icon may link or share space 2814 with other icons on the line. The icon disappears 2816 when the event ends or is over.

In one embodiment, the user interface of the present invention can provide multiple, simultaneous view to the same information without using separate windows. For example, a display of a handheld device may not provide an adequate amount of screen space for presenting information to the user in a parallel fashion. Information is thus divided between several screens and can be displayed sequentially.

In one embodiment, the present invention provides a "zoomable" interface for small screen devices, such as for example mobile phones or personal digital assistants ("PDA"). The zoomable interface allows simultaneous interaction between content, users, tasks, environment, applications and system related information, even when available display area is limited. Objects related to a currently selected object are highlighted. The user interface shows an overview of the terminal contents as well as the status of the contents. Proximity and content information can be displayed and awareness information about persons and events can be provided. The embodiments of the present invention also enable easy customization and scalability. In different embodiments, the width of each region or category may be varied. The user may hide or minimize regions that are not relevant for the current task or if the user needs more room for seeing the objects of a certain region. In one embodiment, the system may do this kind of regions scaling automatically. For example, when zooming into a single region, the other regions may be distorted in such a way that they do not consume a lot of screen space, but yet they provide contextual information about the state of zooming and navigation.

Although the interaction is more straightforward with stylus and touch screen, or with some other pointing device, in other embodiments the interaction can be scaled down for use with a 5-way joystick, for example. In this case the layout is simplified in such a way that it is based on a grid and each region may not contain more than one column. Accessing the detailed information and functions may be done several ways. For example, if the user selects the item by pressing down the 5-way joystick, the default action associated with the object is done. The context menu will pop up, if the user does a long press over the object and now the up-down movements are for highlighting a menu item. Another option is that by pressing the joystick once, the menu will pop-out and the up-down movements are for changing menu highlight. Since the default action is the first on the list it may be accessed with a double click. The menu closes by selecting an item or using an extra soft key.

Further, zoomable user interfaces are considered beneficial, since mobile devices have limited interaction and presentation capabilities and ZUI eliminates the need for scrolling of long lists and focus manipulation. In GUIs, the size of the window limits the amount of viewable content and if the content size is larger than the size of the window, the window content needs to be scrolled. However, a ZUI uses the screen as a canvas itself, where the user can pan and zoom the content. It does not have overlapping windows and uses screen space efficiently. The window borders and controls (scroll bars, minimize and maximize buttons, etc.) do not consume screen space and nonetheless the same familiar user interface components (widgets) may be used. As in focus and context visualizations, ZUI may preserve the spatial relationships of the objects. In addition, this invention reduces the amount of displayed information by letting the user choose what information displays and where.

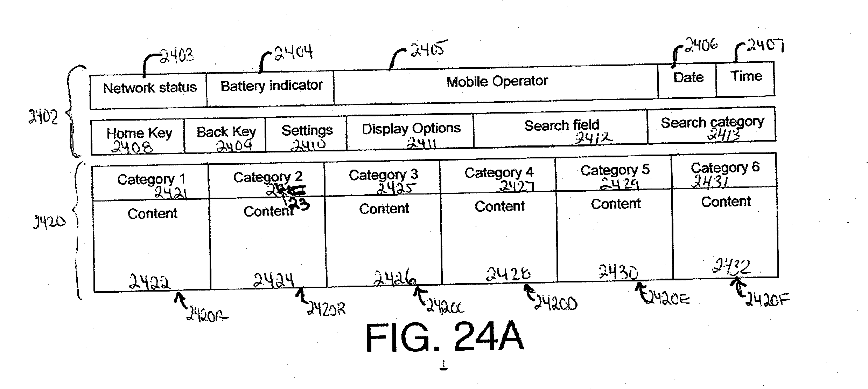

For example, referring to FIG. 24A, the embodiments of a zoomable user interface of the present invention generally comprise two main areas, a system area 2402 and a canvas area 2420.

The system area 2402 generally provides the same or similar functionality with respect to the system area described with relation to FIG. 1. The system area 2402 can include information related to the device status and navigation and system tools.

If the user moves the input focus to the system area 2402, or selects the system area, the system area is maximized. Information in the device related to connections, traffic, and links to areas for changing system settings are provided. For example, the system status information could include information related to active connections and traffic 2403, battery settings and status 2404, operator information 2405, date and time information 2406, 2407.

The system area 2402 could also provide navigation/system functions and tools. These could include for example, back and home keys 2408, 2409 and view controls 2410, 2411. These controls can be used to change the view type (e.g. lists, grids, tilted plane) in the content categories. This kind of control is required because different kinds of content objects may require different views. For example, a grid full of thumbnail images may suit images or video, but it cannot display long object titles that are commonly associated with audio files. The user may also create custom views that best fit the desired purpose, such as for example, "R" related display types, column/grid displays, or recall a previously recorded canvas layout.

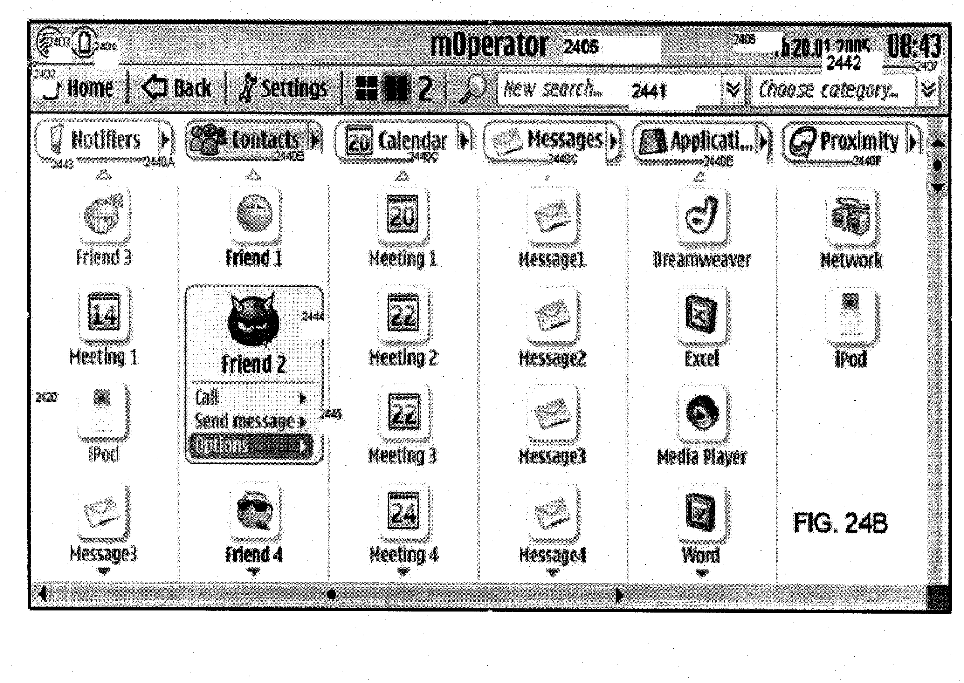

The search area 2412, 2413 generally provides the same search functionality previously described. The area 2412, 2413 may be used for searching content e.g. locally, from the user's own devices, peer-to-peer ("P2P") networks, proximity or Internet, with various search criteria. As the user starts to type the search string in the text box of the search field area 2412, the system starts to filter the irrelevant objects from the categories 2421, 2423, 2425, 2427, 2429 and 2431. If the search results in an empty category, the category could contain a link or button for extending that search beyond the local device. By activating or pressing a button related to the search area, the user may access advanced search features. The search results are presented on the canvas by filtering out (hiding) the irrelevant objects. The search field generally includes a search entry field 2443 and a search category field 2442 as shown in FIG. 24B. FIG. 24B illustrates one embodiment of a user interface display of the information and content described with reference to FIG. 24A, using icons, objects and textual images.

The user interface of the present invention allows interaction with a pointing device. Referring to FIG. 24B, the user moves the cursor (cf. magic lens) over the canvas 2420. As the cursor is moved on top of the object and tapped once, such as object 2444 in FIG.. 24B, the detailed info region 2445 becomes visible. Selecting a desired function zooms in (or opens a window) to the view that presents the desired features and information. Zoom and other view transitions may be enhanced with animations in order to aid the navigation. Also, other kind of effects other than magnifying the object may be used for making the selected object.

Referring to FIG. 24A, the canvas 2420 is a container that may be used for displaying objects. An object on canvas may be e.g., a file, message, calendar event, a link to application or service or contact. Basically, an object can comprise any kind of entity or application stored or presented in the terminal. Objects may be shown as an image, icon, text or any combination of these. The canvas area 2420 is divided further into content categories/regions 2421-2432. The regions 2420A-2420F are containers for the objects. Each region generally contain objects that share similar characteristics. The exact number as well as the shape and size of categories 2421, 2423, 2425, 2427, 2429 and 2431 may vary.

On example of a category could be, referring to FIG. 24B, contacts 2440B. The contacts category 2440B could include for example, phone book contacts and means for being in conversation with the contacts (e.g. voice call, instant messaging, chat). The messages category 2440D could include for example, email, SMS, MMS tools for exchanging messages with people. The Calendar category 2440C can include calendar events as well as other objects that have a temporal or time dimension. The Environment category 2440F (also referred to as proximity) generally displays context or location information as well as proximity data. The Content or Applications category 2440E generally includes all the content objects stored in the device or that the user may access via the device. The Application section 2440E can also provide a place for creating new content or applications that do not fall under one of the defined categories, including third party applications. Included within the Applications category 2440E could be a restricted "Content" category which could include an object "Media" for example that contains all media files of the device (Pictures, Videos, Animations, Music, etc.) Other regions can be added if needed. In one embodiment the canvas 2420 could include the category "Events" for presenting all kinds of event notifiers collectively.

Referring to FIG. 24B, the region title, such as 2443 for Notifiers, may be used for accessing a menu that contains common commands/actions (e.g. sort, create new, delete, minimize) for all the objects of the category 2440A. When an object is selected, the object-specific commands/actions can be accessed via a "Detailed information" area that will be displayed. For example, in FIG. 24B, when the object for "Friend 2" 2444 is highlighted and selected, a detailed information area 2445 appears that includes functions and commands related to the object that can be selected and acted on.

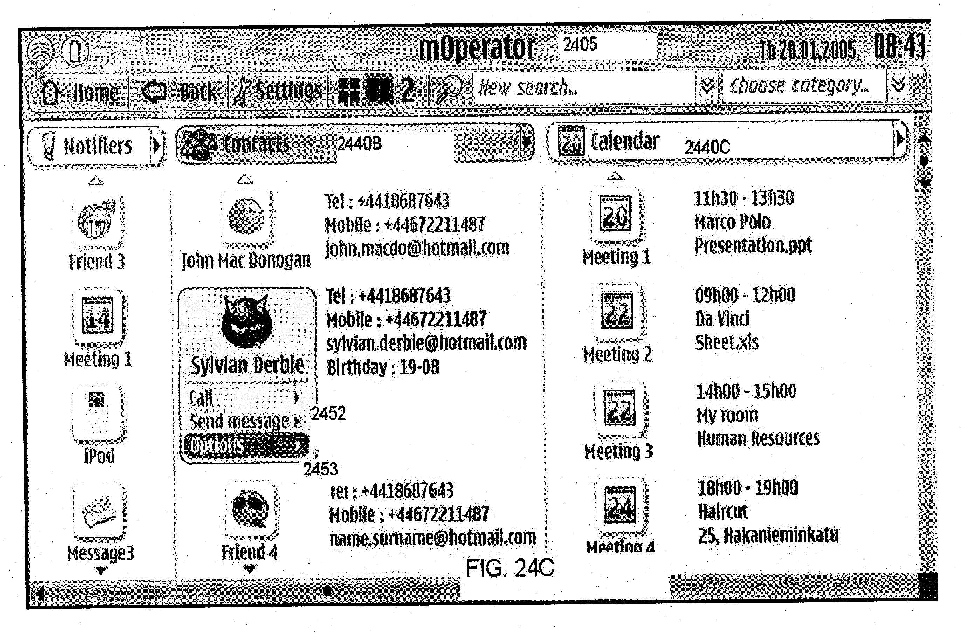

Detailed information about a selected object (dynamic region) can displayed while minimizing the appearance of other objects on the screen. In FIG. 24C, the Contacts category 2440B is highlighted. Additional information related to each item in the contacts category 2440B is displayed, while the non-selected Notifier category 2443 is reduced in size or remains in a reduced size state. Also, as shown in FIG. 24C, if the user has selected an object 2451 in the Contacts category 2440B, part of the canvas may be used for presenting detailed information about the selected object (e.g. the most important metadata) and most frequently used functions related to the selected object.

As shown in FIG. 24C two categories, the Contacts category 2440B and the Calendar category 2440C, have been expanded to include more detailed information related to each item in the respective category. The details can appear adjacent to the respective icons.

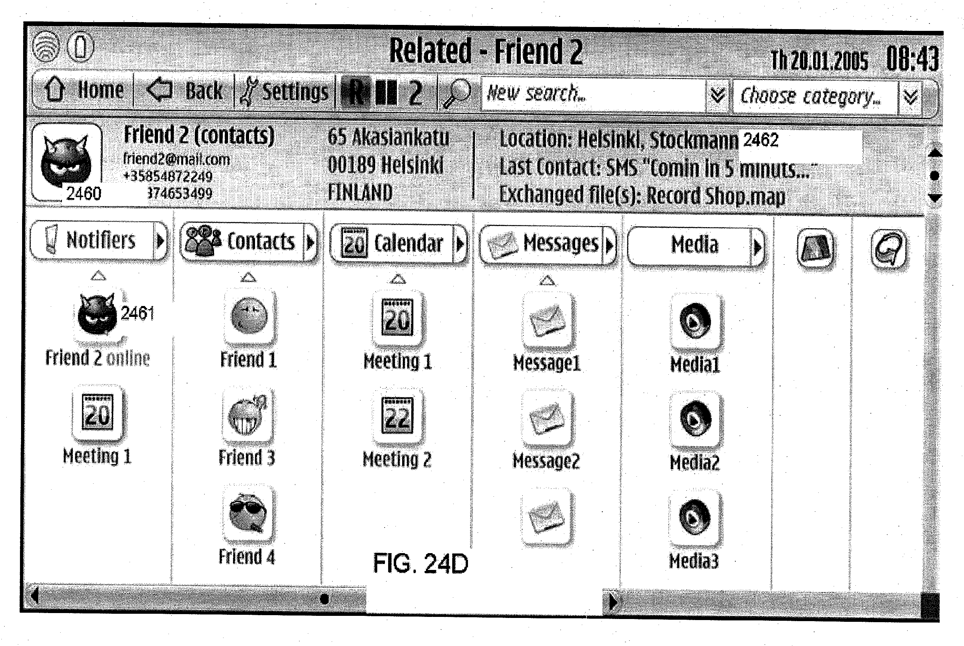

The user interface of the present invention can also provide a related view mode that will allow a user to identify all objects that have a relation to a selected object. For example, referring to FIG. 24D, the object "Friend 2" 2461 is selected. By activating the related view mode all data or information related to the selected object 2461 can be seen. The related information is displayed in the area 2462 and can include location information, last contact data, and the last files that were exchanged between the user and the Friend 2. In alternate embodiments, any suitable categories of related information can be displayed.

Once the user has selected an object, such as 2461, the size of non-selected categories can be reduced in such a way that a part of the canvas may be used for presenting controls to show items that have a relation to the selected object. A "show related" button, *which can be a hardware button or soft key, for example, can be presented. If the user activates this function-all the objects that have a relation to the selected object are emphasized. This can be done for example as a secondary highlight, or graying out or hiding the unrelated objects in the visible categories. If some of the categories do not contain any objects (they all are hidden), these categories may be minimized. Also, the icon for presenting this "parent" item is displayed on related items control region 2460. If the device has pointing device such as stylus or track ball, hovering the cursor on top of secondary highlighted item shows the relation to the parent item (e.g. as tool tip or emphasizing the associated metadata attributes and values in detail info region).

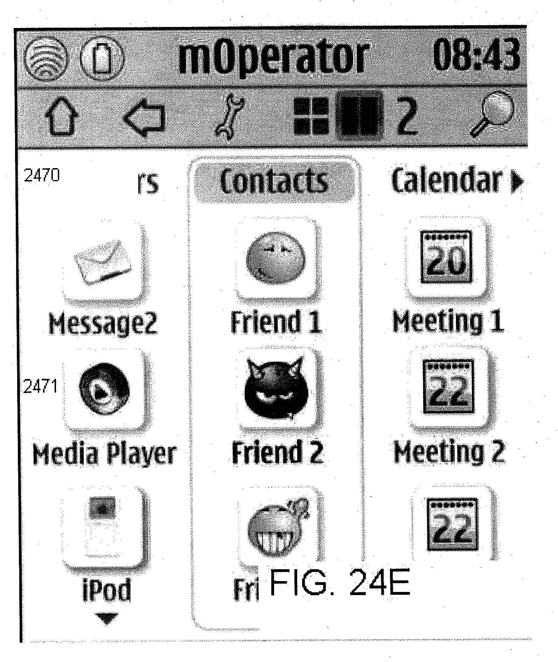

FIG. 24E is an illustration of one embodiment of a user interface incorporating features of the present invention that is downsized to file a screen size that is approximately 176 x 208 pixels. The categories 2470 and items 2471 can be scaled in size to the desired screen size for the particular device.

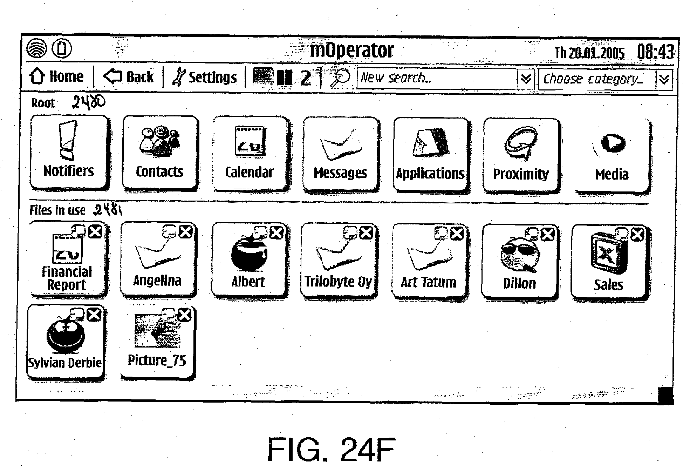

FIG. 24F illustrates another embodiment of a user interface incorporating features of the present invention which displays the categories 2480 and files in use 2481.

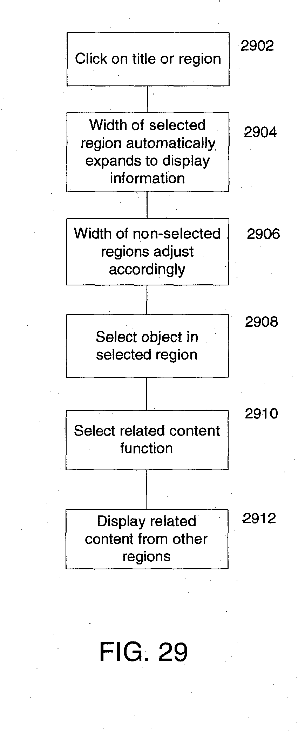

FIG. 29 illustrates one embodiment of a method incorporating features of the present invention. The title of a region is selected or highlighted 2902. The region size, for example its width, expands 2904 to display more information related to the region and the objects in the region. An object is selected 2908 in the region. Information related to the object from the region is displayed. A related content function is activated 2910 and information related to the selected object from other, non-selected regions, is displayed 2912.

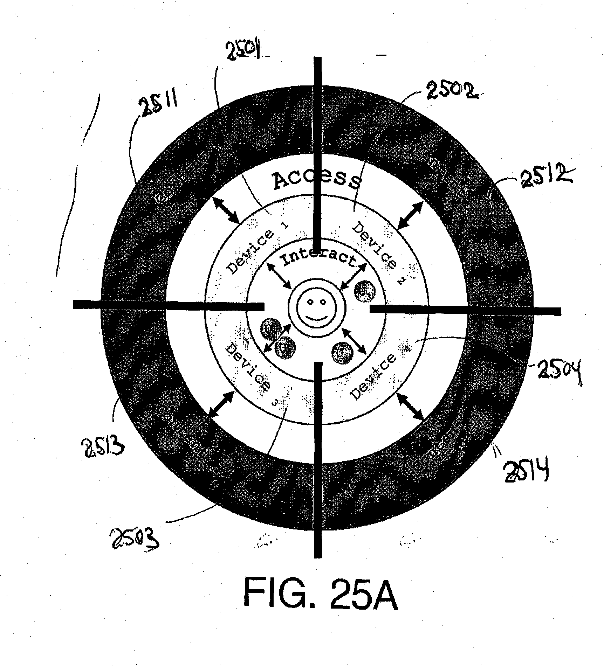

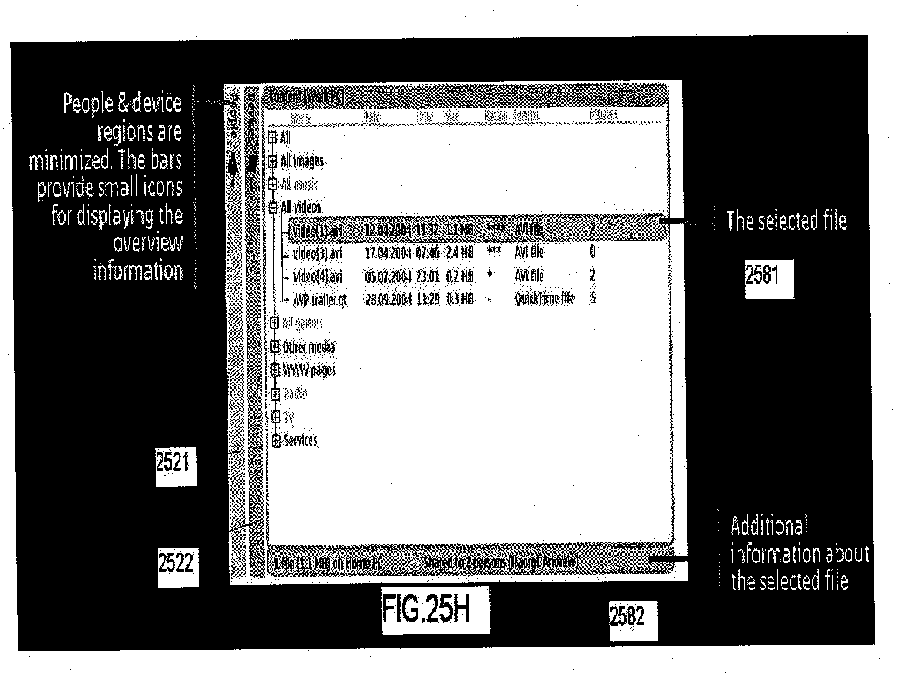

In one embodiment, the present invention provides a user interface for accessing, consuming, managing and sharing digital content between multiple connected devices. Many types of devices can be used for getting, creating, consuming, sharing and managing digital content. Some of these devices can include for example, DVB-T/H receivers, game consoles, PC's, cameras, MP3 players, smart phones, PDA's and mobile telephones. When these devices are connected or interconnected in some way, they can form a device ecosystem, such as that shown in FIG. 25A. The embodiments of the present invention provide a user interface to access, consume, manage and share digital content between multiple connected devices.

Typically, a device that provides digital content provides a separate user interface for its features and functionality. For example, referring to FIG. 25A, a user can have several devices 2501, 2502, 2503, and 2504, with which the user can interact and access digital content. U₁-U₃ present users to whom (a part of) the content is shared and who are able to interact with the device 2401-2404 and access the content. The problems are, e.g., that content 2511 is accessible only via interacting with device 2501 although device 2502 may be able to play content 2511. Device 2501 may have a different user interface and interaction conventions than the device 2502, which requires learning. It may be difficult to remember what content each user is able to access, respectively. Searching/managing content becomes tedious because the user cannot keep track of content in each area shown in FIG. 25A. The present invention provides a user interface that can combine the content of several devices into a single view.

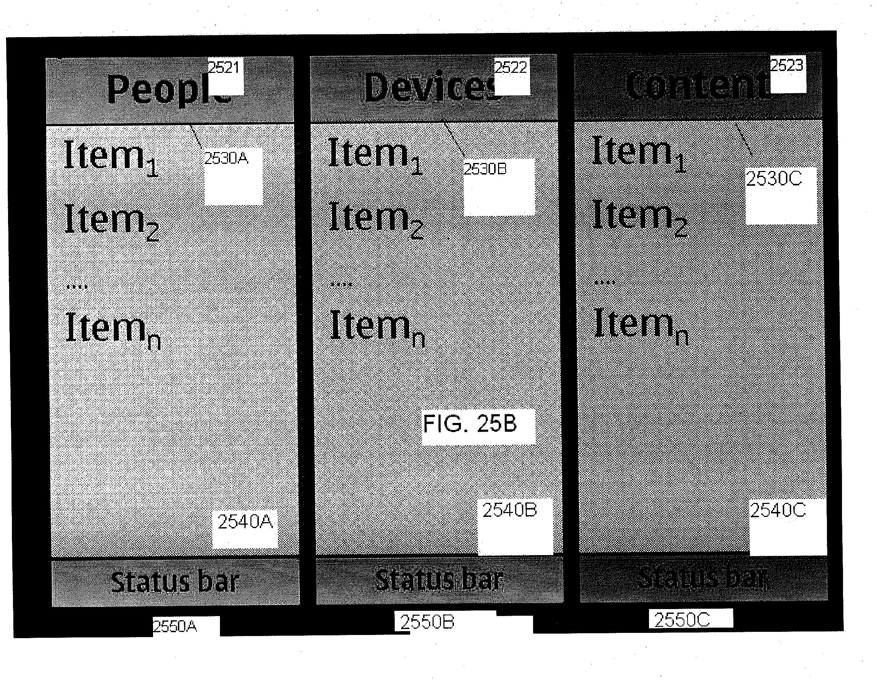

Referring to FIG. 25B, in one embodiment, the user interface of the present invention comprises three main regions. A people region 2521, a devices region 2522, and a content region 2523. The people or user region 2521 generally identifies persons with whom content in a selected device can be shared. This section identifies the user as well as groups and persons with whom the content is or can be shared. The device region identifies all media devices to which a user has access rights, and can include devices for storing and accessing content as well as accessories. The content region identifies digital content accessible via a selected device. This embodiment is generally referred to herein as a "device eco-system". Interaction with the user interface can be with a stylus and touch screen, using "drag & drop" technology, or other suitable navigation means.

Referring to FIG. 25B, each category or region includes a title bar 2530A, 2530B, 2530C, an area 2540A, 2540B, 2540C for describing its contents and a status bar 2550A, 2550B, 2550C for providing additional information about the selection. Although not visible in figure, the functionality of the user interface could be accessed either via menu bar, pop-up (context) menu or toolbar.

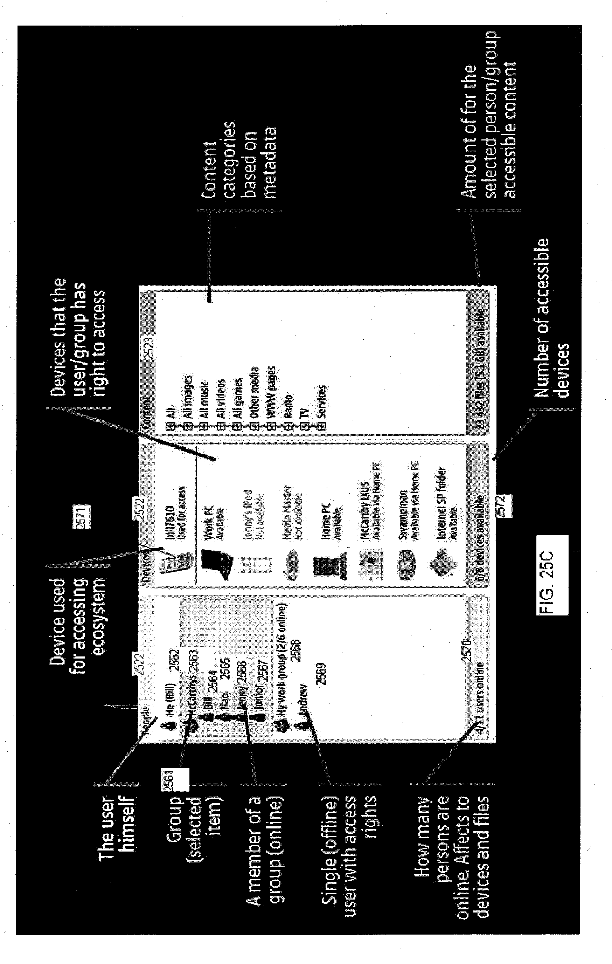

Figure 25C shows a more detailed example of one embodiment of the user interface when a group of users 2561 is selected. People region 2521 shows groups/persons to whom the content is shared and the user him/herself. The user is depicted with icon 2562 where other single users are depicted with another icon 2563-2567. Users could be highlighted in different manners depending on whether they are online or offline. The icon 2568 illustrates a work group where 2/6 users are on line. Icon 2569 represents a single, offline user with access rights. The area 2570 can provide a total number of users that are on or offline.

The devices region 2522 displays all the media devices that the user owns or has the access rights to. If a device is not available (e.g. the device owner is not connected, or does not share the device, or the user's device is not able for some reason to connect to it) it is highlighted differently from the other device icons, such as for example being greyed out. The device currently used for accessing the eco-system, in this example device 2571, is displayed on the top. Area 2572 indicates the number of accessible devices.

The content region 2523 displays the content categories, based on metadata. Digital personal content accessible via (selected devices) is displayed in this region. In this example the content is displayed as a hierarchy, but other kinds of views are also possible.

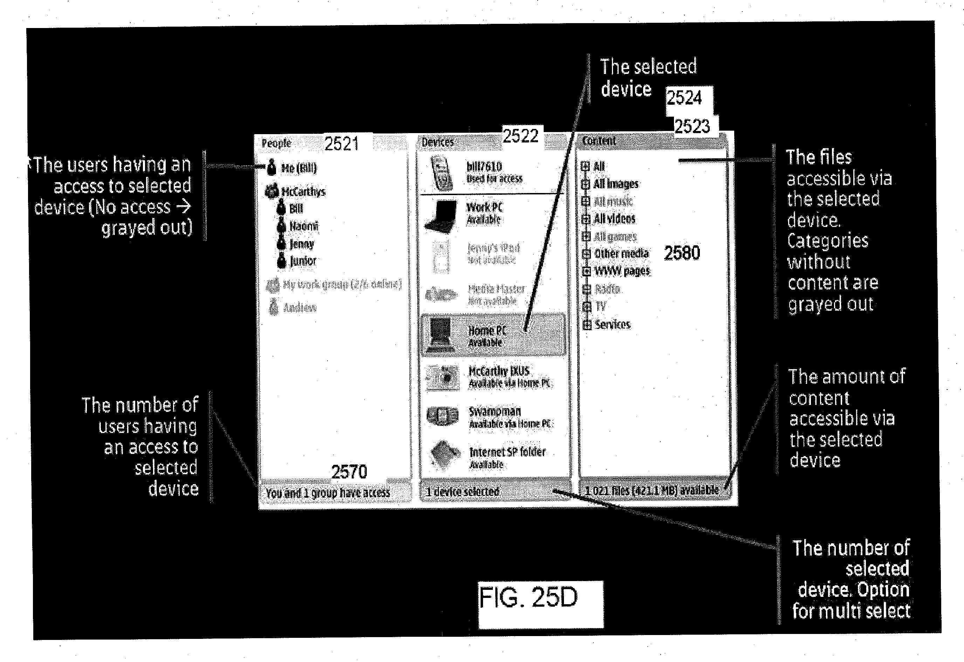

Figure 25D shows an example when a single device 2524 is selected. The selected device has a secondary highlight, is greyed. In the people region 2521 the users that have access to this device 2524 are displayed. These are users 2562-2567 (McCarthy). The users that do not have access, 2568, 2569, are shown as "greyed out". Area 2570 indicates the number of users that have access to a selected device.

Content area 2523 lists the files 2580 accessible via the selected device. Categories without contents are greyed out.

It is also possible to select multiple devices at the same time. (toggle selection on/off).

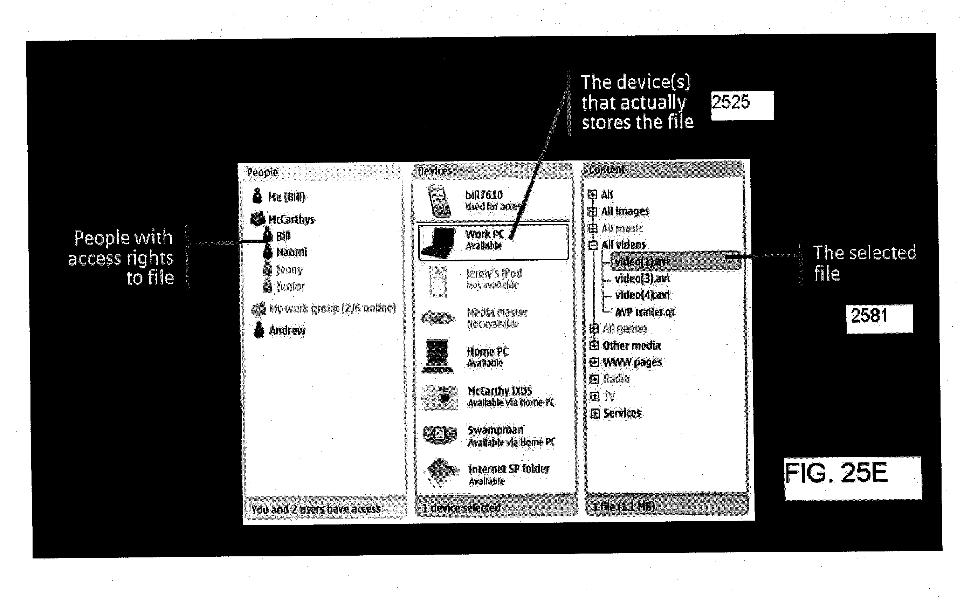

In FIG. 25E, a single device is selected as emphasized by the black thin border, and the input focus is on the content region 2523, where a file 2581 is selected. The device 2525 that actually stores the file 2581 is highlighted. People with access rights to the file 2581, are highlighted in the people region 2.521. These are users 2562, 2563, 2564, 2565 and 2569. The content region 2523 could also provide play controls for the selected file(s) as a toolbar or pop-up menu.

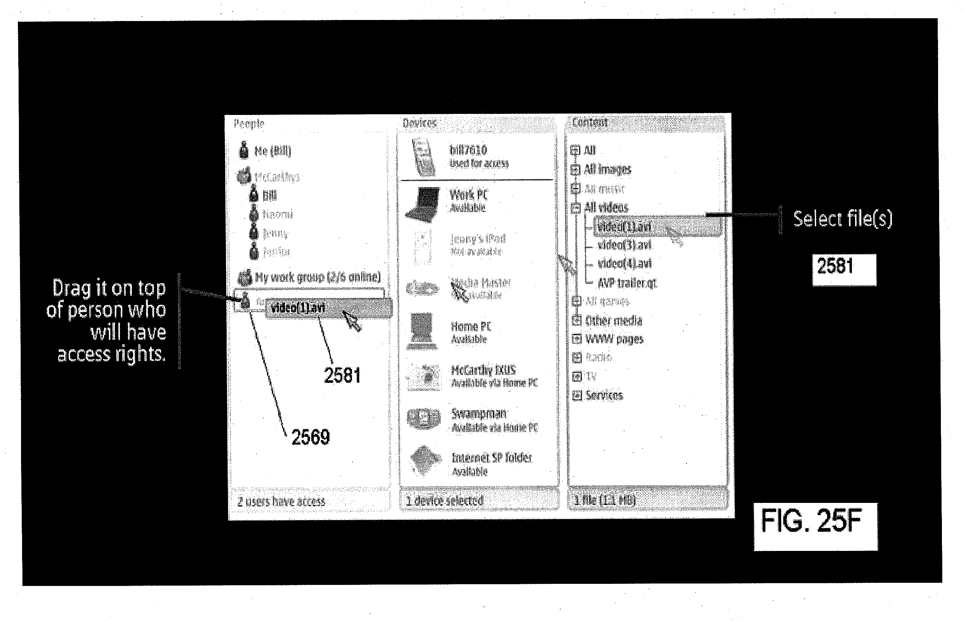

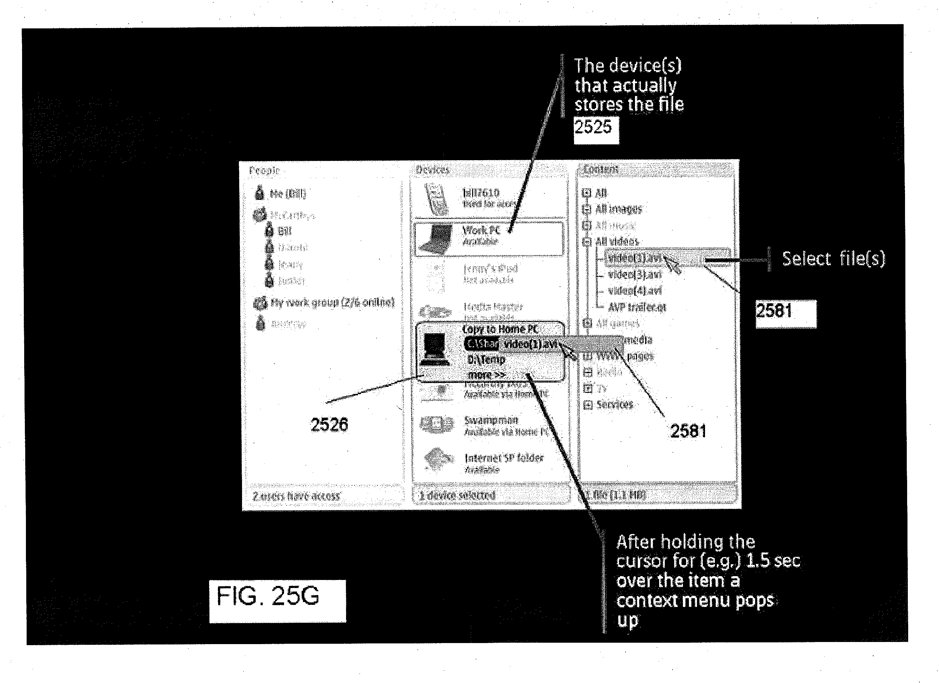

Figures 25F and 25G describe examples about drag and drop interaction, file sharing and copying. In Figure 25F, the user shares a single file 2581 to a single user 2569 by dragging the file 2581 on top of the user 2569 and dropping it there. Similarly in Figure 25G, the user copies a file 2581 to another device 2526. When the user has dragged the object 2581 on top of device item 2526 and held it there for a certain period of time (e.g. 1.5 sec) a pop-up menu with the most important functions is opened and the file 2581 is copied.

FIG: 25H is an example where two regions (People 2521 and Devices 2522) are minimized and the Content region 2523 expanded. In those cases when the user is not interested in e.g. viewing people 2521 or devices 2522, these regions may be minimized by (e.g.) clicking the respective title bar. The remaining region(s) is maximized and the active selections of minimized bars are displayed as icons and text in the minimized bar. The maximized region may display additional information about the items.

The invention provides a unified user interface (i.e. similar interaction, content presentation, and structure) for all the devices of the device eco-system, possibility to manage access rights for the users, devices and content in a single view, possibility to view the content of several devices at the same time, interaction enhanced with drag and drop features and easy to minimize regions that are not of interest and maximize the display space for region of interest.

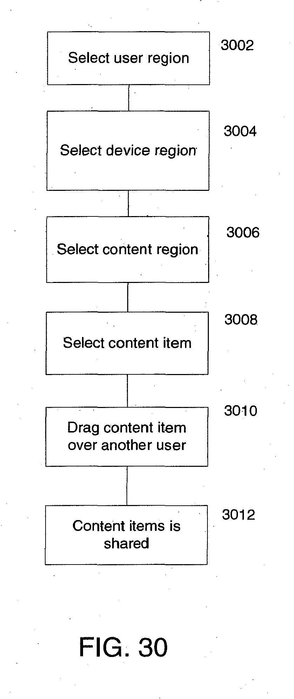

FIG. 30 illustrates one embodiment of a method incorporating features of the present invention. A user(s) is selected 3002 from the user region to identify devices and content for which the user(s) has access permissions. A device is selected 3004 from the device region to identify users that have permission access and content associated with the device. A content file can be selected 3008 from the content region to identify device(s) that can use the content and users that can access the content. In order to share content with another user, the content item of file is selected and dragged 3010 over the other user. The content item is then shared 3012.

The above-described steps can be implemented using standard well-known programming techniques. The novelty of the above-described embodiments lies not in the specific programming techniques but in the use of the steps described to achieve the described results. Software programming code which embodies the present invention is typically stored in permanent storage of some type, such as permanent storage of a computer running a GUI configured to include the present invention. In a client/server environment, such software programming code may be stored with storage associated with a server. The software programming code may be embodied on any of a variety of known media for use with a data processing system, such as a diskette, or hard drive, or CD-ROM. The code may be distributed on such media, or may be distributed to users from the memory or storage of one computer system over a network of some type to other computer systems for use by users of such other systems. The techniques and methods for embodying software program code on physical media and/or distributing software code via networks are well known and will not be further discussed herein. For example, a computer memory can be encoded with executable instructions representing a computer code that can cause a computer' to function in a particular fashion.

It will be understood that each element of the illustrations, and combinations of elements in the illustrations, can be implemented by general and/or special purpose hardware-based systems that perform the specified functions or steps, or by combinations of general and/or special-purpose hardware and computer instructions.

These program instructions may be provided to a processor to produce a machine, such that the instructions that execute on the processor create means for implementing the functions specified in the illustrations. The computer program instructions may be executed by a processor to cause a series of operational steps to be performed by the processor to produce a computer-implemented process such that the instructions that execute on the processor provide steps for implementing the functions specified in the illustrations. Accordingly, the figures support combinations of means for performing the specified functions, combinations of steps for performing the specified functions, and program instruction means for performing the specified functions.

The present invention can be accomplished using hardware, software, or a combination of both hardware and software. The software used for the present invention is stored on one or more processor readable storage devices including hard disk drives, CD-ROMs, DVDs, optical disks, floppy disks, tape drives, RAM, ROM, flash memory or other suitable storage devices. In alternative embodiments, some or all of the software can be replaced by dedicated hardware including custom integrated circuits, gate arrays, FPGAs, PLDs, and special purpose processors. In one embodiment, software implementing the present invention is used to program one or more processors. The one or more processors can be in communication with one or more storage devices (hard disk drives, CD-ROMs, DVDs, optical disks, floppy disks, tape drives, RAM, ROM, flash memory or other suitable storage devices), peripherals (printers, monitors, keyboards, pointing device) and/or communication interfaces (e.g. network cards, wireless transmitter/receivers, etc.).

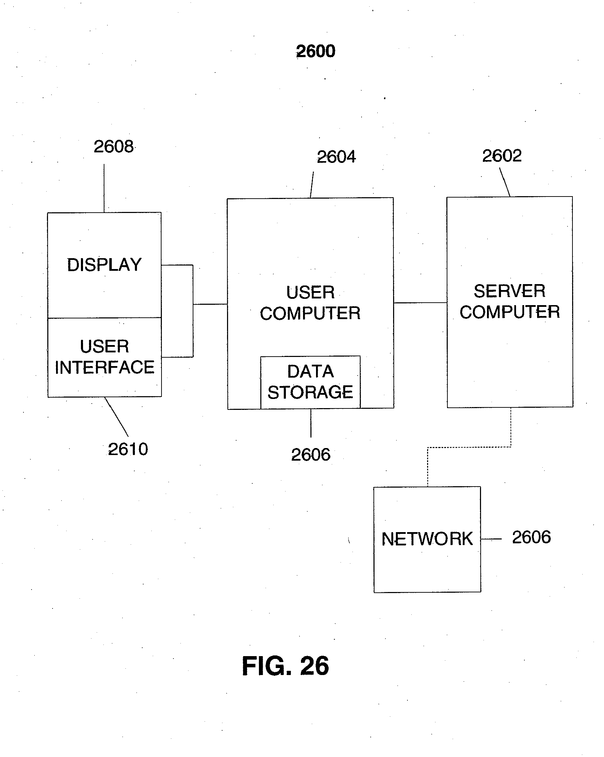

Fig. 26 is a block diagram of one embodiment of a typical apparatus incorporating features of the present invention that may be used to practice the present invention. As shown, a computer system 2600 may be linked to another computer system 2602, such that the computers 2602 and 2604 are capable of sending information to each other and receiving information from each other. In one embodiment, computer system 2602 could include a server computer adapted to communicate with a network 2604, such as for example, the Internet. In an alternate embodiment, the system 2600 could comprise a peer-to-peer ("P2P") network, where each computer forms a network node and acts as both client and server at the same time. Computer systems 2602 and 2604 can be linked together in any conventional manner including a modem, hard wire connection, wireless connection or fiber optic link. Generally, information can be made available to both computer systems 2602 and 2604 using a communication protocol typically sent over a communication channel or through a dial-up connection on ISDN line. Computers 2602 and 2604 are generally adapted to utilize program storage devices embodying machine readable program source code that is adapted to cause the computers 2602 and 2604 to perform the method steps of the present invention. The program storage devices incorporating features of the present invention may be devised, made and used as a component of a machine utilizing optics, magnetic properties, electromagnetic signals and/or electronics to perform the procedures and methods of the present invention. In alternate embodiments, the program storage devices may include magnetic media such as a diskette or computer hard drive, which is readable and executable by a computer. In other alternate embodiments, the program storage devices could include optical disks, read-only-memory ("ROM") floppy disks and semiconductor materials and chips.

Computer systems 2602 and 2604 may also include a microprocessor for executing stored programs. Computer 2600 may include a data storage device 2606 on its program storage device for the storage of information and data. The computer program or software incorporating the processes and method steps incorporating features of the present invention may be stored in one or more computers 2602 and 2604 on an otherwise conventional program storage device. In one embodiment, computers 2602 and 2604 may include a user interface 2610, and a display interface 2608 from which features of the present invention can be accessed. The user interface 2610 and the display interface 2608 can be adapted to allow the input of queries and commands to the system, as well as present the results of the commands and queries.

### The following numbered paragraphs are also disclosed

1. A method for navigating information in a mobile terminal, comprising:
   displaying, on a graphical user interface of the
      mobile terminal, a plurality of window regions, wherein each region is a container for objects and provides connections, information and related functions of the terminal;
   receiving a first user input to make a selection of
      one of the regions;
   receiving a second input to make a selection of an
      object in the selected region;
   in response to the second user input, displaying a
      first level of detailed objects and information related to the selected object in an adjacent area of the display.
2. The method of paragraph 1 further comprising selecting an item of information displayed in the adjacent area of the display and moving the selected item of information into one of the regions, wherein the region is automatically searched for information related to the item of information.
3. The method of paragraph 1 further comprising selecting at least one object in a selected area and dragging the selected object into another region, searching the another region for any information related to the selected object and displaying any information related to the selected object found in the another region.
4. The method of paragraph 1 further comprising displaying each region along a substantially horizontal line, the regions being stacked in a substantially vertical column.
5. The method of paragraph 1 further comprising:
   selecting an object in a region and displaying a first
      level of information with at least one dynamic icon and a status indicator;
   selecting on of the at least one dynamic icon and
      displaying a second level of information with more detailed data related to the selected icon;
   opening an object associated with the second level of
      information and displaying a third level of information associated with the opened object; and
   expanding the third level of information to a fourth
      level in order to display relations to other objects in an applications window border region.
6. The method of paragraph 1 further comprising, upon the selection of one of the regions, resizing the selected regions and non-selected regions so that summary information related to the selected region can be displayed within the display area of the device.
7. The method of paragraph 1 further comprising selecting a region to be searched using a search criteria, conducting the search and displaying the search results for the region search, and for each non-selected region, providing an indication if any information that is related to the search criteria is available in the non-selected region.
8. The method of paragraph 7 further comprising selecting a non-selected region in which there is an indication of information related to the search criteria and displaying the related information.
9. The method of paragraph 1 further comprising entering an idle mode of the device during a period of inactivity, comprising reducing a size of each region to a minimal
   size and wherein a wallpaper area of the display is expanded.
10. The method of paragraph 9 further comprising:
   detecting an occurrence of an event in the device; and signalizing the detection of the event by providing a
      notifier in a first state on the display related to the category in which the event is occurring.
11. The method of paragraph 10 further comprising, after a pre-determined period of time, expanding the notifier from the first state to the second state, the second state providing more detailed information about the event than the first state.
12. The method of paragraph 11 further comprising changing the second state of the notifier to a third state, the third state indicating an occurrence of a new event, a type of event, and a number of similar events occurring in the same category.
13. The method of paragraph 12 further comprising, in the third state, providing at least one control function for acting on or controlling the event.
14. The method of paragraph 10 further comprising selecting a category in which the event is occurring and displaying a list of all events occurring in the selected category.
15. The method of paragraph 14, further comprising, after selecting the category, displaying an event filter list, selecting an event from the filter list, and displaying in the list, only those events that have occurred that are related to the event selected from the event filter list.
16. The method of paragraph 1 further comprising:
   detecting an occurrence of an event related to a
      function of the device;
   displaying at least a portion of a line segment on a
      portion of the display of the device;
   vibrating the line segment at a pre-determined
      frequency and for a pre-determined time period to indicate the detection of the occurrence of the event;
   forming at least a portion of an icon at one end of
      the line segment, the icon corresponding to a type of the detected event;
   moving the at least a portion of the icon from the one
      end toward another end of the line segment, the at least a portion of the icon changing state to a whole icon;
   forming a pop-up window adjacent to the whole icon,
      the pop-up window providing information related to the event and disappearing from view after a predetermined time period; and
   moving the whole icon to the other end of the line
      segment.
17. The method of paragraph 16 wherein a frequency of vibration of the line segment is dependent upon the type of event.
18. The method of paragraph 16 further comprising forming a new icon on the line segment in response to the detection of a new event, determining that the new icon for the new event is similar to a previous icon for a previous event on the line segment and merging the new icon and the previous icon.
19. The method of paragraph 16 further comprising selecting the icon to open an associated event object.
20. The method of paragraph 1 further comprising:
   accessing a title area of a region to select the
      region;
   selecting an object within the region, wherein a size
      of the selected object is expanded to display at least one function associated with the selected object.
21. The method of paragraph 20 further comprising, upon selection of the title area of the region, expanding a width of the selected region to expand a display area associated with each object in the region and reducing a width of any non-selected region.
22. The method of paragraph 1 further comprising, after selecting an object in a region, displaying information corresponding to the selected object from the region and displaying information that is related to the selected object that is obtained from any non-selected regions.
23. The method of paragraph 1 further comprising upon selection of the object in the selected region, highlighting objects in each non-selected region that have a relationship with the selected object in the selected region.
24. The method of paragraph 23 wherein a device object is selected in a device region of the user interface and, in a user region of the user interface all users who have access rights to the selected device are highlighted and in a content region of the user interface, all content categories associated with the selected device are displayed.
25. The method of paragraph 24 further comprising selecting a content file in the content region and dragging the selected content file into the users region and onto a user to provide the user with access rights to the selected content file.
26. The method of paragraph 24 further comprising selecting a content file in the content region and dragging the selected content file into the device region and onto a device to make the selected content file available through the device.
27. The method of paragraph 1 further comprising:
   providing user region identifying a list of users;
   providing a device region identifying a list of available devices; and
   providing a content region identifying a list of available content files;
   selecting a user, whereupon all devices to which the selected user has access rights
      are highlighted and content files in the content region accessible via the highlighted devices are highlighted;
   selecting a device, whereupon all users in the user region that have access rights to
      the device are highlighted and all content files in the content region that are accessible through the selected device are highlighted; and
   selecting a file from the content region, whereupon all devices in the device region
      from which the selected file can be accessed are highlighted, and all users in the user region that have access rights to the highlighted devices in the device region are highlighted.
28. A user interface for an electronic device comprising:
   a system area;
   a summary stripe area that includes a display of categories of information available
      to be accessed using the device; and
   a detailed information area that provides at least an overview of any information
      related to a selected stripe in the summary stripe area.
29. The user interface of paragraph 28 wherein each summary stripe area includes one or more objects that are linked to information related to the stripe area.
30. The user interface of paragraph 29 wherein the summary stripe area comprises a content category stripe, a calendar category stripe, a contact category stripe, an applications category stripe and an environment category stripe.
31. The user interface of paragraph 28 further comprising each summary stripe being oriented in a substantially horizontal orientation on the display.
32. The user interface of paragraph 28 wherein each summary stripe includes at least one selectable dynamic icons, image, text, or hypertext.
33. The user interface of paragraph 28 wherein each summary stripe includes at least a first level of information that is displayed when the summary stripe is selected and a second level of information that is displayed when an icon on the first level is selected, the second level providing more detailed information about the selected stripe than the first level.
34. The user interface of paragraph 33 further comprising a third level of information that is displayed upon selection of an icon in the second level, that displays the information of the second level and displays relations of the information of the second level to other objects on an application windows border region of the display of the device.
35. The user interface of paragraph 28 wherein the user interface comprises a computer and a software program operating on the computer.
36. A method for providing and accessing menu functions on a display of an electronic device comprising:
   providing on the display, one or more categories of information in a menu structure;
   reformatting, upon selection of one of the categories, the selected menu function to
      be displayed as the primary object on the display;
   determining which of non-selected categories has a relationship with the selected
      menu function; and
   reformatting the non-selected menu functions that are related to the selected menu
      function to be displayed as secondary objects relative to the primary object on the display.
37. A graphical user interface for a terminal device comprising:
   a display screen;
   a user input device;
   a processor arranged to display content of the device on the display screen;
   means for dividing the content of the device into a plurality of regions, each region
      providing information related to the content and functions of the terminal the processor being arranged to display:
      a primary region; and
      at least one secondary region, the secondary region including more detailed information about a selected object in a primary region.
38. The graphical user interface of paragraph 37, further comprising:
   means for providing a list of devices that can be accessed through the user interface; means for providing list of users that have access rights to the listed devices; and
   means for providing a list of content that can be accessed from the listed devices.
39. A graphical user interface as defined in paragraph 37 wherein the graphical user interface comprises a computer and a software program operating on the computer.
40. A software product comprising instructions executable by a processor unit to render the processor unit able of performing the steps according to paragraph 1.
41. The software product according to paragraph 40, wherein the software product is stored on a magnetic or optic data carrier.
42. The software product according to paragraph 40, wherein the software product is stored in a computer memory.
43. The software product according to paragraph 40, wherein the software product is stored on a read only memory.
44. The software product according to paragraph 40, wherein the software product is stored on a computer remote from the mobile terminal and is able to be transmitted on an electric or electromagnetic signal.
45. A computer program product comprising:
   a computer useable medium having computer readable code means embodied
      therein for causing a computer to generate a user interface for a terminal device, the computer readable code means in the computer program product comprising:
   computer readable program code means for causing a computer to display, on a
      graphical user interface of the mobile terminal, a plurality of window regions, wherein each region is a container for objects and provides connections, information and related functions of the terminal;
   computer readable program code means for causing a computer to receive a first
      user input to make a selection of one of the regions;
   computer readable program code means for causing a computer to receive a second
      input to make a selection of an object in the selected region;
   computer readable program code means for causing a computer to display a first
      level of detailed objects and information related to the selected object in an adjacent area of the display.
46. A computer program with program code, stored on a machine-readable carrier, for realizing the method according to paragraph 1 if the program runs on a computer.

## Claims

1. An apparatus comprising:
a processor; and
a memory including computer program code,
the memory and the computer program code configured to, with the at least one processor, cause the apparatus to perform at least the following:
display a user interface, the user interface comprising a combination of one or more dynamic icons and indicators, each dynamic icon or indicator being associated with at least one object or application, and configured to change appearance to reflect changes in the associated at least one object or application.

2. The apparatus of claim 1 wherein a said dynamic icon or indicator is configured to change appearance to reflect the download progress of the associated object or application.

3. The apparatus of claim 1 wherein a said dynamic icon or indicator comprises a progress bar within the dynamic icon or indicator.

4. The apparatus of claim 1, wherein the appearance of a said dynamic icon or indicator is configured to provide one or more of status and property indications.

5. The apparatus of claim 1, wherein the appearance of a said dynamic icon or indicator is configured to indicate that more detailed information is available.

6. The apparatus of claim 1, wherein the appearance of a said dynamic icon or indicator is configured to indicate that an event is occurring or has occurred.

7. The apparatus of claim 1, wherein a said dynamic icon or indicator is a message count icon.

8. The apparatus of claim 5 wherein the appearance of a said dynamic message count icon or indicator reflects one or more of:
the number of messages stored;
the number of new messages received;
whether a new message has been received; and
whether there are unread messages.

9. The apparatus of claim 1, wherein the apparatus is an electronic device, a wireless device, a personal digital assistant, mobile terminal, cellular telephone, mobile telephone, a hand-held computer, a portable computer, a desktop computer, a game device, a game console, or a personal digital assistant.

10. A method, the method comprising:
displaying a user interface, the user interface comprising a combination of one or more dynamic icons and indicators, each dynamic icon or indicator being associated with at least one object or application, and configured to change appearance to reflect changes in the associated at least one object or application.

11. A computer program, the computer program comprising computer program code configured to:
display a user interface, the user interface comprising a combination of one or more dynamic icons and indicators, each dynamic icon or indicator being associated with at least one object or application, and configured to change appearance to reflect changes in the associated at least one object or application.

12. A method comprising:
causing a graphical user interface to provide an indicator associated with an application;
displaying an overlay for the indicator upon recognition of an event in the application;
and
providing a count of new events recognized by the application in the overlay.

13. A method comprising:
causing a graphical user interface to provide an indicator associated with an application;
displaying an overlay for the indicator upon recognition of an event in the application;
and
providing a count of all events recognized by the application in the overlay and highlighting the overlay as a new event occurs.

14. An apparatus comprising:
a processor; and
a memory including computer program code,
the memory and the computer program code configured to, with the at least one processor, cause the apparatus to perform at least the following:
determine whether a combination of one or more individuals (402), devices (403) and services (404), are present within a predetermined proximity, area or location,
enable the display of the results of the determination on a user interface.

15. An apparatus comprising:
a processor; and
a memory including computer program code,
the memory and the computer program code configured to, with the at least one processor, cause the apparatus to perform at least the following:
enable a graphical user interface of an electronic device to be re-orientated, with respect to the screen, from a first orientation to a second orientation.
